# EUROPEAN PATENT SPECIFICATION

(11) **EP 4 320 925 B1**
(45) Date of publication and mention of the grant of the patent: **31.12.2025**
(21) Application number: 22720662.0
(22) Date of filing: 05.04.2022
(51) Int. Cl.: H04W 48/12, H04W 48/02, H04W 68/00, H04W 60/00, H04W 92/12, H04W 92/14, H04W 92/20

(54) **METHODS, APPARATUSES, AND COMPUTER PROGRAM PRODUCTS FOR PROVIDING SELECTION OF CELLS SERVING NETWORK SLICES FOR AN AREA**
VERFAHREN, VORRICHTUNGEN UND COMPUTERPROGRAMMPRODUKTE ZUR BEREITSTELLUNG DER AUSWAHL VON ZELLEN, DIE NETZWERK-SLICES FÜR EINEN BEREICH VERSORGEN
PROCÉDÉS, APPAREILS ET PRODUITS-PROGRAMMES D'ORDINATEUR DE FOURNITURE DE SÉLECTION DE CELLULES DESSERVANT DES TRANCHES DE RÉSEAU D'UNE ZONE

(30) Priority: 05.04.2021 US 202163200941 P; 29.07.2021 US 202163226964 P
(43) Date of publication of application: 14.02.2024
(73) Proprietor: Nokia Technologies Oy, 02610 Espoo (FI)
(72) Inventor: WON, Sung Hwan, Flower Mound, Texas 75028 (US); MCGRATH, Martin, Coppell, Texas 75019 (US); BULAKCI, Ömer, 80997 Munich (DE); NASEER-UL-ISLAM, Muhammad, 81737 Munich (DE); CHANDRAMOULI, Devaki, Plano, Texas 75025 (US)
(74) Representative: Page White Farrer
(86) International application number: PCT/EP2022/058917
(87) International publication number: WO 2022/214443

(56) References cited:
- WO-A1-2018/128076
- WO-A1-2019/138060
- WO-A1-2020/146739
- WO-A1-2020/167615
- WO-A1-2020/186387
- WO-A1-2020/200034
- WO-A1-2020/224345
- US-A1- 2019 380 109
- US-A1- 2021 337 461
- US-A1- 2021 385 739
- US-A1- 2022 167 260
- US-B2- 10 582 560
- CATT: "P-CR TR24.801: Tracking Area and TAI", 3GPP DRAFT; C1-080550, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Puerto Vallarta, Mexico; 20080205, 5 February 2008 (2008-02-05), XP050027884, [retrieved on 20080205]
- HUAWEI ET AL: "Clarification of Mobility Restriction List", vol. RAN WG3, no. E-meeting; 20201102 - 20201112, 23 October 2020 (2020-10-23), XP051945983, Retrieved from the Internet <URL:https://ftp.3gpp.org/tsg_ran/WG3_Iu/TSGR3_110-e/Docs/R3-206635.zip R3-206635.docx> [retrieved on 20201023]
- CHINA TELECOM: "CR to 38.413 for introducing SNPN in Rel-16", vol. RAN WG3, no. Chongqing, China; 20191014 - 20191018, 4 October 2019 (2019-10-04), XP051809780, Retrieved from the Internet <URL:https://ftp.3gpp.org/tsg_ran/WG3_Iu/TSGR3_105bis/Docs/R3-195397.zip R3-195397 CR to 38.413 for introducing SNPN in Rel-16.docx> [retrieved on 20191004]
- HUAWEI ET AL: "Pseudo-CR on registration areas in the 5GS", vol. CT WG1, no. Zhangjiajie, P.R of China; 20170515 - 20170519, 22 May 2017 (2017-05-22), XP051284182, Retrieved from the Internet <URL:http://www.3gpp.org/ftp/tsg_ct/WG1_mm-cc-sm_ex-CN1/TSGC1_104_Zhangjiajie/Docs/> [retrieved on 20170522]
- ERICSSON: "New WID on Support of Network Sharing for Multiple Cell-ID and multiple TAC broadcast", vol. TSG RAN, no. Shenzhen, China; 20190318 - 20190321, 11 March 2019 (2019-03-11), XP051690414, Retrieved from the Internet <URL:http://www.3gpp.org/ftp/tsg%5Fran/TSG%5FRAN/TSGR%5F83/Docs/RP%2D190525%2Ezip> [retrieved on 20190311]
- LG ELECTRONICS INC: "Cell configuration within TA/RA to Support Allowed NSSAI", vol. RAN WG2, no. Electronic meeting; 20210125 - 20210205, 15 January 2021 (2021-01-15), XP051973873, Retrieved from the Internet <URL:https://ftp.3gpp.org/tsg_ran/WG2_RL2/TSGR2_113-e/Docs/R2-2100766.zip R2-2100766 Cell Configuration within TARA to Support Allowed NSSAI.docx> [retrieved on 20210115]
- SAMSUNG R&D INSTITUTE UK: "Removal of editor's note on max number of TAs per UE", vol. CT WG1, no. Montreal (Canada); 20180226 - 20180302, 16 February 2018 (2018-02-16), XP051395581, Retrieved from the Internet <URL:http://www.3gpp.org/ftp/tsg%5Fct/WG1%5Fmm%2Dcc%2Dsm%5Fex%2DCN1/TSGC1%5F109%5FMontreal/Docs/> [retrieved on 20180216]
- NOKIA: "Summary of [AT112-e][250][Slicing] LS replies to SA2 and RAN3 (Nokia)", vol. RAN WG2, no. Electronic; 20210125 - 20210205, 10 February 2021 (2021-02-10), XP051977836, Retrieved from the Internet <URL:https://ftp.3gpp.org/tsg_ran/WG2_RL2/TSGR2_113-e/Docs/R2-2101973.zip R2-2101973[250][Slicing] LS replies to SA2 and RAN3-summary.docx> [retrieved on 20210210]
- NOKIA ET AL: "Summary of Offline Discussion of NPN slicing", vol. RAN WG3, no. Online; 20200420 - 20200430, 4 May 2020 (2020-05-04), XP051880725, Retrieved from the Internet <URL:https://ftp.3gpp.org/tsg_ran/WG3_Iu/TSGR3_107bis_e/Docs/R3-202518.zip R3-202518_Summary_NPNslicing_v2.doc> [retrieved on 20200504]
- NOKIA ET AL: "Support of network slicing in an SNPN", vol. CT WG1, no. Wroclaw (Poland); 20190826 - 20190830, 19 August 2019 (2019-08-19), XP051763247, Retrieved from the Internet <URL:http://www.3gpp.org/ftp/tsg_ct/WG1_mm-cc-sm_ex-CN1/TSGC1_119_Wroclaw/Docs/C1-194619.zip> [retrieved on 20190819]
- ZTE: "Clarification on RAN node identification with network sharing scenario", vol. RAN WG3, no. Online Meeting ;20200420 - 20200430, 10 April 2020 (2020-04-10), XP051873851, Retrieved from the Internet <URL:https://ftp.3gpp.org/tsg_ran/WG3_Iu/TSGR3_107bis_e/Docs/R3-201903.zip R3-201903_Stage2 R16 CR for TS38.300.docx> [retrieved on 20200410]
- ERICSSON ET AL: "RAN sharing with multiple Cell ID broadcast", vol. RAN WG3, no. Spokane, WA, U.S.; 20181112 - 20181116, 11 November 2018 (2018-11-11), XP051558612, Retrieved from the Internet <URL:http://www.3gpp.org/ftp/Meetings%5F3GPP%5FSYNC/RAN3/Docs/R3%2D186859%2Ezip> [retrieved on 20181111]
- LG ELECTRONICS: "Mobility Registration for multiple TACs which are in forbidden for subscription data", vol. CT WG1, no. Electronic meeting; 20220117 - 20220125, 10 January 2022 (2022-01-10), XP052090498, Retrieved from the Internet <URL:https://ftp.3gpp.org/tsg_ct/WG1_mm-cc-sm_ex-CN1/TSGC1_133e-bis/Docs/C1-220236.zip C1-220236_Mobility Registration for multiple TACs which are in forbidden for subscription data.docx> [retrieved on 20220110]
- NOKIA ET AL: "23.700-41: Solution for KI#5; support of a Network Slice with an Area of Service not matching existing TA boundaries", vol. SA WG2, no. Elbonia; 20220406 - 20220412, 29 March 2022 (2022-03-29), XP052133646, Retrieved from the Internet <URL:https://ftp.3gpp.org/tsg_sa/WG2_Arch/TSGS2_150E_Electronic_2022-04/Docs/S2-2202822.zip S2-2202822 23.700-41 pCR Solution for KI#5_BE final.docx> [retrieved on 20220329]
- BLACKBERRY UK LIMITED ET AL: "Consideration of all TAs of a PLMN as forbidden TAs for roaming", vol. RAN WG2, no. San Francisco, U.S.A; 20131111 - 20131115, 13 November 2013 (2013-11-13), XP050736913, Retrieved from the Internet <URL:http://www.3gpp.org/ftp/Meetings_3GPP_SYNC/RAN/RAN2/Docs/> [retrieved on 20131113]
- HUAWEI: "(TP for NPN BL CR for TS 38.423): Slicing aspects for NPN", vol. RAN WG3, no. Online Meeting ;20200420 - 20200430, 10 April 2020 (2020-04-10), XP051874151, Retrieved from the Internet <URL:https://ftp.3gpp.org/tsg_ran/WG3_Iu/TSGR3_107bis_e/Docs/R3-202355.zip R3-202355 (TP for NPN BL CR for TS 38.423) Slicing aspects for NPN.docx> [retrieved on 20200410]
- NOKIA ET AL: "Discussion on LS on EPS Additional RRM Policy Index", vol. TSG RAN, no. Shenzhen, China; 20190318 - 20190321, 11 March 2019 (2019-03-11), XP051690128, Retrieved from the Internet <URL:http://www.3gpp.org/ftp/tsg%5Fran/TSG%5FRAN/TSGR%5F83/Docs/RP%2D190274%2Ezip> [retrieved on 20190311]
- VODAFONE ET AL: "Handling of forbidden TAI(s) within broadcast TACs in registration procedure", vol. CT WG1, no. E-Meeting; 20220217 - 20220225, 10 February 2022 (2022-02-10), XP052105718, Retrieved from the Internet <URL:https://ftp.3gpp.org/tsg_ct/WG1_mm-cc-sm_ex-CN1/TSGC1_134e/Docs/C1-221070.zip C1-221070_TACs_MRU.docx> [retrieved on 20220210]
- ERICSSON: "On RAN Sharing - 5GS and EN-DC", vol. RAN WG3, no. Online Meeting ;20200420 - 20200430, 9 April 2020 (2020-04-09), XP051870591, Retrieved from the Internet <URL:https://ftp.3gpp.org/tsg_ran/WG3_Iu/TSGR3_107bis_e/Docs/R3-202102.zip R3-202102.doc> [retrieved on 20200409]
- HUAWEI: "Further discussions on NCGI and TAI when multiple cell IDs are broadcast in SIB1", vol. RAN WG3, no. E-Meeting; 20200224 - 20200306, 10 April 2020 (2020-04-10), XP051874211, Retrieved from the Internet <URL:https://ftp.3gpp.org/tsg_ran/WG3_Iu/TSGR3_107bis_e/Docs/R3-202419.zip R3-202419 Further discussions on NCGI and TAI when multiple cell IDs are broadcast in SIB1.doc> [retrieved on 20200410]
- LG ELECTRONICS: "Solution update & evaluation 6.3.27 "Multiple level Tracking Areas handling"", vol. SA WG2, no. Reno, Nevada, USA; 20161114 - 20161118, 14 November 2016 (2016-11-14), XP051185043, Retrieved from the Internet <URL:http://www.3gpp.org/ftp/Meetings_3GPP_SYNC/SA2/Docs/> [retrieved on 20161114]
- NOKIA ET AL: "23.700-41: Solution for KI#5; support of a Network Slice with an Area of Service not matching existing TA boundaries", vol. SA WG2, no. Elbonia; 20220406 - 20220412, 12 April 2022 (2022-04-12), XP052135510, Retrieved from the Internet <URL:https://ftp.3gpp.org/tsg_sa/WG2_Arch/TSGS2_150E_Electronic_2022-04/INBOX/S2-2203090.zip S2-2203090 was S2-2202822 23.700-41 pCR Solution for KI#3_BE final r01.docx> [retrieved on 20220412]
- NOKIA ET AL: "Response to R3-190163 and R3-190705", vol. RAN WG3, no. Athens, Greece; 20190225 - 20190301, 21 February 2019 (2019-02-21), XP051604834, Retrieved from the Internet <URL:http://www.3gpp.org/ftp/tsg%5Fran/WG3%5FIu/TSGR3%5F103/Docs/R3%2D190900%2Ezip> [retrieved on 20190221]
- ERICSSON: "Support of RAN sharing with multiple Cell ID broadcast", vol. RAN WG3, no. Athens, Greece; 20190225 - 20190301, 16 February 2019 (2019-02-16), XP051604641, Retrieved from the Internet <URL:http://www.3gpp.org/ftp/tsg%5Fran/WG3%5FIu/TSGR3%5F103/Docs/R3%2D190705%2Ezip> [retrieved on 20190216]
- NOKIA ET AL: "Cell Configuration with TA for Allowed NSSAI", vol. RAN WG3, no. E-Meeting; 20201102 - 20201112, 22 October 2020 (2020-10-22), XP051941624, Retrieved from the Internet <URL:https://ftp.3gpp.org/tsg_ran/WG3_Iu/TSGR3_110-e/Docs/R3-205973.zip R3-205973_TAslice.doc> [retrieved on 20201022]
- ERICSSON: "[TP for BL CR 38.413] Corrections for Network Slicing for SNPNs", vol. RAN WG3, no. Online Meeting ;20200420 - 20200430, 9 April 2020 (2020-04-09), XP051870627, Retrieved from the Internet <URL:https://ftp.3gpp.org/tsg_ran/WG3_Iu/TSGR3_107bis_e/Docs/R3-202138.zip R3-202138.doc> [retrieved on 20200409]
- NOKIA ET AL: "(TP for BL CR for TS 38.423): Enabling multiple SCTP associations", vol. RAN WG3, no. Chengdu, P.R.China; 20181008 - 20181012, 28 September 2018 (2018-09-28), XP051528773, Retrieved from the Internet <URL:http://www.3gpp.org/ftp/tsg%5Fran/WG3%5FIu/TSGR3%5F101bis/Docs/R3%2D185498%2Ezip> [retrieved on 20180928]
- NOKIA ET AL: "Discussion on AMF information", vol. RAN WG3, no. Xian, China; 20190408 - 20190412, 6 April 2019 (2019-04-06), XP051702495, Retrieved from the Internet <URL:http://www.3gpp.org/ftp/Meetings%5F3GPP%5FSYNC/RAN3/Docs/R3%2D191210%2Ezip> [retrieved on 20190406]
- NOKIA ET AL: "Configuration of Network Slicing over NG and Xn", vol. RAN WG3, no. Berlin, Germany; 20170821 - 20170825, 21 August 2017 (2017-08-21), XP051319719, Retrieved from the Internet <URL:http://www.3gpp.org/ftp/Meetings_3GPP_SYNC/RAN3/Docs/> [retrieved on 20170821]
- NOKIA ET AL: "(TP for NPN BL CR for TS 38.473): NPN for F1", vol. RAN WG3, no. E-Meeting; 20200601 - 20200611, 22 May 2020 (2020-05-22), XP051889071, Retrieved from the Internet <URL:https://ftp.3gpp.org/tsg_ran/WG3_Iu/TSGR3_108-e/Docs/R3-203127.zip R3-203127 TP for NPN F1 Stage 3.doc> [retrieved on 20200522]

## Description

### CROSS-REFERENCE TO RELATED APPLICATIONS

The present application claims priority to US Provisional Patent Application No. 63/200,941 filed April 5, 2021 and US Provisional Patent Application No. 63/226,964 filed July 29, 2021.

### TECHNOLOGICAL FIELD

An example embodiment relates generally to cell selection associated with network slices via a communication infrastructure.

### BACKGROUND

The 3rd Generation Partnership Project (3GPP) is a standards organization which develops protocols for mobile telephony and is known for the development and maintenance of various standards including second generation (2G), third generation (3G), fourth generation (4G), Long Term Evolution (LTE), and fifth generation (5G) standards. The 5G network has been designed as a Service Based Architecture (SBA) or, in other words, a system architecture in which the system functionality is achieved by a set of network functions providing services to other authorized network functions to access their services.

The 5G network may comprise a plurality of base stations (e.g., Next generation NodeB (gNB), RAN nodes, etc.) that serve one or more cells across a particular area. As a User Equipment (UE) moves through the particular area cell changes, known as handovers in the connected mode, occur to maintain connectivity between the UE and the serving Radio Access Network (RAN). Cells transmit and receive data with the UE via multiple beams. Conditional Handover (CHO) allows a source cell to prepare a UE with multiple target cells for future handover procedures.

The 5G network system allows for the support of network slices, which are end-to-end logical networks which support a certain set of network functions. As such, a network slice is a logical network infrastructure which provides specific network capabilities and network characteristics. Across a 5G network, comprising a plurality of network slices, particular network slices can be configured to support particular features (e.g., hardware specifications, network functions, domain access, etc.) that are not common to all network slices. A UE can be configured to access multiple networks and/or network slices over a shared access point. Access to network slices can be restricted to a UE that is associated with certain credentials or meets certain requirements.

Network slicing, as introduced by 5G systems, incorporates the concept of allowing differentiated treatment of UEs dependent on each customer's particular requirements. Thus, network slicing in 5G systems makes it possible for Mobile Network Operators (MNOs) to consider customers as belonging to different tenant types with each tenant type having respective service requirements. The service requirements of a particular tenant group are governed in accordance with respect to the network slice types associated with each tenant type. A UE belonging to a particular tenant type is eligible to use network slices specified according to their respective Service Level Agreement (SLA) and subscriptions.

Network slices may be configured to differ either in their service requirements, such as Ultra-Reliable Low Latency Communication (URLLC) or enhanced Mobile Broadband (eMBB), or via the tenant that provides those particular services. Network slice support is assumed to be uniform in a Tracking Area (TA) such that all the cells in a TA have the same network slice support. A Registration Area (RA) is a list of TAs that support the same network slices from a UE perspective. When a UE registers to a network, the UE can indicate the network slices for access via requested S-NSSAI.

The core network analyzes the UE profile and subscription data to verify the list of network slices the UE can access. The core network provides a list of allowed network slices to the UE. The core network knows the current TA of the UE from registration request and knows the slice support of the neighboring TAs. In an RA for a UE, all of the TAs in the RA for the UE support the allowed Network Slice Selection Assistance Information (NSSAI) for the UE. An RA is a list of TAs that support the same network slices from a UE perspective. The core network analyses the UE profile and subscription data to verify which network slices the UE can access.

The 5G system introduces and allows for the support of Non-Public Networks (NPNs) which are 5G system deployed networks for non-public use. As such NPNs are either a Stand-Alone Non-Public Network (SNPN) which does not rely on network functions provided by a Public Land Mobile Network (PLMN), or a Public Network Integrated NPN (PNI-NPN) which does operate with the support of a PLMN. In order for a UE to access NPNs onboarding procedures are carried out between the UE and the network to ensure that the UE either possess or can obtain the appropriate credentials.

Nokia et. al., "Response to R3-190163 and R3-190705", 3GPP R3-190900, discusses aspects relating to single/multiple Cell ID configurations and multiple TAC/single Cell IR configurations, where SIB may comprise a plurality of TACs, each TAC being associated with a different PLMN.

Ericsson, "Support of RAN sharing with multiple Cell ID broadcast", 3GPP R3-190705, relates to multi operator core networks (MOCN) where several operators share RAN resources, where each operator may specify its own TAC, thereby eliminating the need to co-ordinate TAC values between operators.

WO 2020/224345 A1 & US 2021/385739 A1 relate to aspects for inter-working between a PLMN and non-public network (NPN), where a base station of the PLMN may generate a TA of the NPN, which is exclusive to the NPN, and so the base station can avoid configuring the same TA for NPN and PLMN.

### BRIEF SUMMARY

Methods, apparatuses, and computer program products are disclosed which facilitate support of non-uniform network slice deployment(s) within a service area of a registration area and/or tracking area covered by at least a radio access network.

According to an aspect of the present disclosure, there is provided a method of a user equipment, the method comprising: receiving, from a cell, a system information block comprising a plurality of tracking area codes associated with at least one network, wherein a respective tracking area code of the plurality of tracking area codes is associated with one or more network slices or one or more network slice groups. The method further comprises selecting a tracking area code from the plurality of tracking area codes associated with the at least one network, wherein the selecting is based on a priority indicated by an encoding order of the plurality of tracking area codes in the system information block.

In some embodiments, the method may further comprise identifying, from the plurality of tracking area codes, a first tracking area code and one or more second tracking area codes. In some embodiments, the method may further comprise selecting the first tracking area code or one of the one or more second tracking area codes. In some embodiments, the method may further comprise receiving, from the cell for at least one respective tracking area code of the plurality of tracking area codes, one or more identifiers for one or more network slices or one or more network slice groups, receiving, from the cell, a tracking area identifiers list comprising one or more of a forbidden tracking area identifier or an allowable tracking area identifier, and determining whether one or more of the plurality of tracking area codes is associated with the tracking area identifiers list. In some embodiments, the method may further comprise determining one or more allowable tracking area codes of the plurality of tracking area codes, and selecting a respective allowable tracking area code based upon relative priorities of the one or more allowable tracking area codes. In some embodiments, the method may further comprise determining one or more forbidden tracking area codes of the plurality of tracking area codes, and selecting a respective tracking area code based upon relative priorities of the plurality of tracking area codes that are not forbidden.

. In some embodiments of the method, the first tracking area code of the plurality of tracking area codes is associated with a first information element of a system information block. In some embodiments of the method, the one or more second tracking area codes of the plurality of tracking area codes are associated with a second information element of the system information block that is different than the first information element. In some embodiments of the method, the first tracking area code is a primary tracking area code and the one or more second tracking area codes are secondary tracking area codes. In some embodiments of the method, a respective tracking area code of the plurality of tracking area codes is mapped to respective single network slice selection assistance information. In some embodiments of the method, the at least one network comprises one or more of a public land mobile network, a stand-alone non-public network or a public network integrated non-public network.

According to an aspect of the present disclosure, there is provided a method of an access node, the method comprising: causing transmission, to at least one user equipment, of a system information block comprising a plurality of tracking area codes associated with at least one network, wherein a respective tracking area code of the plurality of tracking area codes is associated with one or more network slices or one or more network slice groups, and wherein an encoding order of the plurality of tracking area codes in the system information block indicates a priority of the plurality of tracking area codes.

In some embodiments, the method may further comprise causing transmission, to the at least one user equipment for at least one respective tracking area code of the plurality of tracking area codes, of one or more identifiers for the one or more network slices or the one or more network slice groups According to an aspect of the present invention, there is provided

According to an aspect of the present disclosure, there is provided a computer program product that comprises at least a non-transitory computer readable storage medium having program code portions stored thereon with the program code portions being configured, upon execution, by at least a processor, to cause transmission, to at least one user equipment, of a system information block comprising a plurality of tracking area codes associated with at least one network, wherein a respective tracking area code of the plurality of tracking area codes is associated with one or more network slices or one or more network slice groups, and wherein an encoding order of the plurality of tracking area codes in the system information block indicates a priority of the plurality of tracking area codes.

In some embodiments, the computer program product may be further configured, upon execution, by at least the processor, to at least cause transmission, to the at least one user equipment for at least one respective tracking area code of the plurality of tracking area codes, of one or more identifiers for the one or more network slices or the one or more network slice groups. In some embodiments, the computer program product may be further configured, upon execution, by at least the processor, to at least receive, from a network, the plurality of tracking area codes associated with the at least one network, wherein the plurality of tracking area codes comprises a first tracking area code and one or more second tracking area codes.

In some embodiments of the computer program product, the first tracking area code of the plurality of tracking area codes is associated with a first information element of a system information block. In some embodiments of the computer program product, the one or more second tracking area codes of the plurality of tracking area codes are associated with a second information element of the system information block that is different than the first information element. In some embodiments of the computer program product, the first tracking area code is a primary tracking area code and the one or more second tracking area codes are secondary tracking area codes. In some embodiments of the computer program product, a respective tracking area code of the plurality of tracking area codes is mapped to respective single network slice selection assistance information. In some embodiments of the computer program product, the at least one network comprises one or more of a public land mobile network, a stand-alone non-public network or a public network integrated non-public network.

According to an aspect of the present disclosure, there is provided an apparatus that comprises means for causing transmission, to at least one user equipment, of a system information block comprising a plurality of tracking area codes associated with at least one network, wherein a respective tracking area code of the plurality of tracking area codes is associated with one or more network slices or one or more network slice groups, and wherein an encoding order of the plurality of tracking area codes in the system information block indicates a priority of the plurality of tracking area codes.

In some embodiments, the apparatus may further comprise means for causing transmission, to the at least one user equipment for at least one respective tracking area code of the plurality of tracking area codes, of one or more identifiers for the one or more network slices or the one or more network slice groups. In some embodiments, the apparatus may further comprise means for receiving, from a network, the plurality of tracking area codes associated with the at least one network, wherein the plurality of tracking area codes comprises a first tracking area code and one or more second tracking area codes.

In some embodiments of the apparatus, the first tracking area code of the plurality of tracking area codes is associated with a first information element of a system information block. In some embodiments of the apparatus, the one or more second tracking area codes of the plurality of tracking area codes are associated with a second information element of the system information block that is different than the first information element. In some embodiments of the apparatus, the first tracking area code is a primary tracking area code and the one or more second tracking area codes are secondary tracking area codes. In some embodiments of the apparatus, a respective tracking area code of the plurality of tracking area codes is mapped to respective single network slice selection assistance information. In some embodiments of the apparatus, the at least one network comprises one or more of a public land mobile network, a stand-alone non-public network or a public network integrated non-public network.

Various other aspects are also described in the following detailed description and in the attached claims.

### BRIEF DESCRIPTION OF THE DRAWINGS

Having thus described embodiments of the disclosure in general terms, reference will now be made to the accompanying drawings, which are not necessarily drawn to scale, and wherein:
FIG. 1 illustrates an example architecture for a communications network, according to some embodiments;
FIG. 2 illustrates an example architecture for a communications network, according to some embodiments;
FIG. 3 illustrates an example architecture for a communications network, according to some embodiments;
FIG. 4 illustrates an example computing device for communicating over communication networks with other network entities, according to some embodiments;
FIG. 5 illustrates an example architecture for a communications network comprising network slices, according to some embodiments;
FIG. 6 is a block diagram illustrating an example single-network slice selection assistance information format, according to some embodiments;
FIG. 7 is a block diagram illustrating an example area associated with a communications network, in accordance with some example embodiments;
FIG. 8 is a block diagram illustrating example areas associated with a communications network, in accordance with some example embodiments;
FIG. 9A is a block diagram illustrating example areas associated with a communications network, in accordance with some example embodiments;
FIG. 9B is a block diagram illustrating example areas associated with a communications network, in accordance with some example embodiments;
[0064] FIG. 10 is a signaling diagram illustrating communications, such as between a communication device and network entities, in accordance with some example embodiments;
FIG. 11 is a flowchart illustrating the operations performed, such as by a communication device or other client device, in accordance with some example embodiments;
FIG. 12 is a flowchart illustrating the operations performed, such as by a communication device or other client device, in accordance with some example embodiments;
FIG. 13 is a flowchart illustrating the operations performed, such as by a communication device or other client device, in accordance with some example embodiments;
FIG. 14A is a signaling diagram illustrating communications, such as between network entities, in accordance with some example embodiments;
FIG. 14B is a signaling diagram illustrating communications, such as between network entities, in accordance with some example embodiments;
FIG. 15A is a signaling diagram illustrating communications, such as between network entities, in accordance with some example embodiments;
FIG. 15B is a signaling diagram illustrating communications, such as between network entities, in accordance with some example embodiments;
FIG. 16A is a signaling diagram illustrating communications, such as between network entities, in accordance with some example embodiments;
FIG. 16B is a signaling diagram illustrating communications, such as between network entities, in accordance with some example embodiments;
FIG. 17A is a signaling diagram illustrating communications, such as between network entities, in accordance with some example embodiments;
FIG. 17B is a signaling diagram illustrating communications, such as between network entities, in accordance with some example embodiments; and
FIG. 18 is a flowchart illustrating the operations performed, such as by a network entity, in accordance with some example embodiments.

### DETAILED DESCRIPTION

Some embodiments of the present invention will now be described more fully hereinafter with reference to the accompanying drawings, in which some, but not all, embodiments of the invention are shown. Indeed, various embodiments of the invention can be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "exemplary" are used to be examples with no indication of quality level. Like reference numerals refer to like elements throughout. As used herein, the terms "data," "content," "information," and similar terms can be used interchangeably to refer to data capable of being transmitted, received and/or stored in accordance with embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

Additionally, as used herein, the terms "node," "entity," "intermediary," "intermediate entity," "go-between," and similar terms can be used interchangeably to refer to computers connected via, or programs running on, a network or plurality of networks capable of data creation, modification, deletion, transmission, receipt, and/or storage in accordance with embodiments of the present invention.

Additionally, as used herein, the terms "user equipment," "user device," "device," "apparatus," "mobile device," "personal computer," "laptop computer," "laptop," "desktop computer," "desktop," "mobile phone," "tablet," "smartphone," "smart device," "cellphone," "computing device," "communication device," "user communication device," "terminal," and similar terms can be used interchangeably to refer to an apparatus, such as may be embodied by a computing device, configured to access a network or plurality of networks for at least the purpose of wired and/or wireless transmission of communication signals in accordance with certain embodiments of the present disclosure.

Additionally, as used herein, the terms "network slice," "specific slice," "slice," "network portion," and similar terms can be used interchangeably to refer to an end to end logical communication network, or portion thereof, within a PLMN, SNPN, PNI-NPN, or another network.

As defined herein, a "computer-readable storage medium," which refers to a non-transitory physical storage medium (e.g., volatile or non-volatile memory device), can be differentiated from a "computer-readable transmission medium," which refers to an electromagnetic signal. Such a medium can take many forms, including, but not limited to a non-transitory computer-readable storage medium (e.g., non-volatile media, volatile media), and transmission media. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Examples of non-transitory computer-readable media include a magnetic computer readable medium (e.g., a floppy disk, hard disk, magnetic tape, any other magnetic medium), an optical computer readable medium (e.g., a compact disc read only memory (CD-ROM), a digital versatile disc (DVD), a Blu-Ray disc (BD), the like, or combinations thereof), a random access memory (RAM), a programmable read only memory (PROM), an erasable programmable read only memory (EPROM), a FLASH-EPROM, or any other non-transitory medium from which a computer can read. The term computer-readable storage medium is used herein to refer to any computer-readable medium except transmission media. However, it will be appreciated that where embodiments are described to use a computer-readable storage medium, other types of computer-readable mediums can be substituted for or used in addition to the computer-readable storage medium in alternative embodiments.

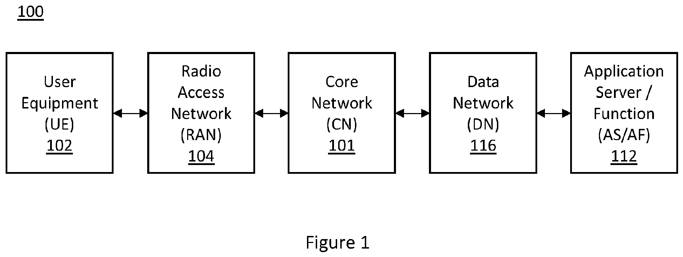

In the following, certain embodiments are explained with reference to communication devices capable of communication via a wired and/or wireless network and communication systems serving such communication devices. Before explaining in detail these example embodiments, certain general principles of a wired and/or wireless communication system, access systems thereof, and communication devices are briefly explained with reference to FIGs. 1-3 to assist in understanding the technology underlying the described examples.

According to some embodiments, a communication device or terminal can be provided for wireless access via cells, base stations, access points, the like (e.g., wireless transmitter and/or receiver nodes providing access points for a radio access communication system and/or other forms of wired and/or wireless networks), or combinations thereof. Such wired and/or wireless networks include, but are not limited to, networks configured to conform to 2G, 3G, 4G, LTE, 5G, and/or any other similar or yet to be developed future communication network standards. The present disclosure contemplates that any methods, apparatuses, computer program codes, and any portions or combination thereof can also be implemented with yet undeveloped communication networks and associated standards as would be developed in the future and understood by one skilled in the art in light of the present disclosure.

Access points and hence communications there through are typically controlled by at least one appropriate control apparatus so as to enable operation thereof and management of mobile communication devices in communication therewith. In some embodiments, a control apparatus for a node can be integrated with, coupled to, and/or otherwise provided for controlling the access points. In some embodiments, the control apparatus can be arranged to allow communications between a user equipment and a core network or a network entity of the core network. For this purpose, the control apparatus can comprise at least one memory, at least one data processing unit such as a processor or the like, and an input/output interface (e.g., global positioning system receiver/transmitter, keyboard, mouse, touchpad, display, universal serial bus (USB), Bluetooth, ethernet, wired/wireless connections, the like, or combinations thereof). Via the interface, the control apparatus can be coupled to relevant other components of the access point. The control apparatus can be configured to execute an appropriate software code to provide the control functions. It shall be appreciated that similar components can be provided in a control apparatus provided elsewhere in the network system, for example in a core network entity. The control apparatus can be interconnected with other control entities. The control apparatus and functions can be distributed between several control units. In some embodiments, each base station can comprise a control apparatus. In alternative embodiments, two or more base stations can share a control apparatus.

Access points and associated controllers can communicate with each other via a fixed line connection and/or via a radio interface. The logical connection between the base station nodes can be provided for example by an X2, an S1, a similar interface, or combinations thereof. This interface can be used for example for coordination of operation of the stations and performing reselection or handover operations. The logical communication connection between the initial communication node and the final communication node of the network can comprise a plurality of intermediary nodes. Additionally, any of the nodes can be added to and removed from the logical communication connection as required to establish and maintain a network function communication.

The communication device or user equipment can comprise any suitable device capable of at least receiving a communication signal comprising data. The communication signal can be transmitted via a wired connection, a wireless connection, or combinations thereof. For example, the device can be a handheld data processing device equipped with radio receiver, data processing and user interface apparatus. Non-limiting examples include a Mobile Station (MS) such as a mobile phone or what is known as a 'smart phone,' a portable computer such as a laptop or a tablet computer provided with a wireless interface card or other wireless interface facility, Personal Data Assistant (PDA) provided with wireless communication capabilities, or any combinations of these or the like. Further examples include wearable wireless devices such as those integrated with watches or smart watches, eyewear, helmets, hats, clothing, earpieces with wireless connectivity, jewelry and so on, Universal Serial Bus (USB) sticks with wireless capabilities, modem data cards, machine type devices or any combinations of these or the like.

In some embodiments, a communication device, e.g., configured for communication with the wireless network or a core network entity, can be exemplified by a handheld or otherwise mobile communication device or user equipment. A mobile communication device can be provided with wireless communication capabilities and appropriate electronic control apparatus for enabling operation thereof. Thus, the communication device can be provided with at least one data processing entity, for example a central processing unit and/or a core processor, at least one memory and other possible components such as additional processors and memories for use in software and hardware aided execution of tasks it is designed to perform. The data processing, storage, and other relevant control apparatus can be provided on an appropriate circuit board and/or in chipsets. Data processing and memory functions provided by the control apparatus of the communication device are configured to cause control and signaling operations in accordance with certain embodiments as described later in this description. A user can control the operation of the communication device by means of a suitable user interface such as touch sensitive display screen or pad and/or a keypad, one of more actuator buttons, voice commands, combinations of these, or the like. A speaker and a microphone are also typically provided. Furthermore, a mobile communication device can comprise appropriate connectors (either wired or wireless) to other devices and/or for connecting external accessories, for example hands-free equipment, thereto.

In some embodiments, a communication device can communicate wirelessly via one or more appropriate apparatuses for receiving and transmitting signals (e.g., global positioning system receiver/transmitter, remote touchpad interface with remote display, Wi-Fi interface, etc.). In some embodiments, a radio unit can be connected to the control apparatus of the device. The radio unit can comprise a radio part and associated antenna arrangement. The antenna arrangement can be arranged internally or externally to the communication device.

FIGs. 1-3 illustrate various example architectures for a communications network 100 in which the various methods, apparatuses, and computer program products can be carried out and/or used. In some embodiments, the communications network 100 can comprise any suitable configuration, number, orientation, positioning, and/or dimensions of components and specialized equipment configured to provide an air interface (e.g., New Radio (NR)) for communication or connection between a User Equipment 102 (UE 102) and a Data Network 116 (DN 116) via a Core Network 101 (CN 101) of the communications network 100. The UE 102 can be associated with one or more devices associated with one or more network function (NF) service consumers. As illustrated in FIG. 1, a communications network 100 can be provided in which the UE 102 is in operable communication with the Radio Access Network 104 (RAN 104), such as by way of a transmission tower, a base station, an access point, a network node, and/or the like. In some embodiments, the RAN 104 can communicate with the CN 101 or a component or entity thereof. In some embodiments, the CN 101 can facilitate communication between the UE 102 and the DN 116, such as for sending data, messages, requests, the like, or combinations thereof. In some embodiments, the DN 116 or the CN 101 can be in communication with an Application Server or Application Function 112 (AS/AF 112). The RAN 104, CN 101, DN 116, and/or AS/AF 112 can be associated with a Network Repository Function (NRF), NF service producer, Service Communication Proxy (SCP), Security Edge Protection Proxy (SEPP), Policy Charging Function (PCF), the like, or combinations thereof.

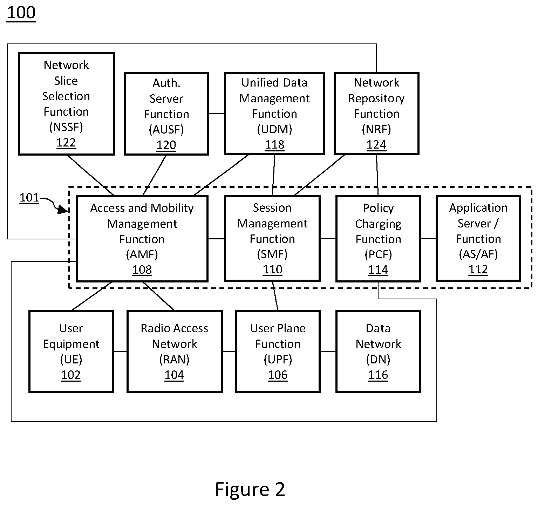

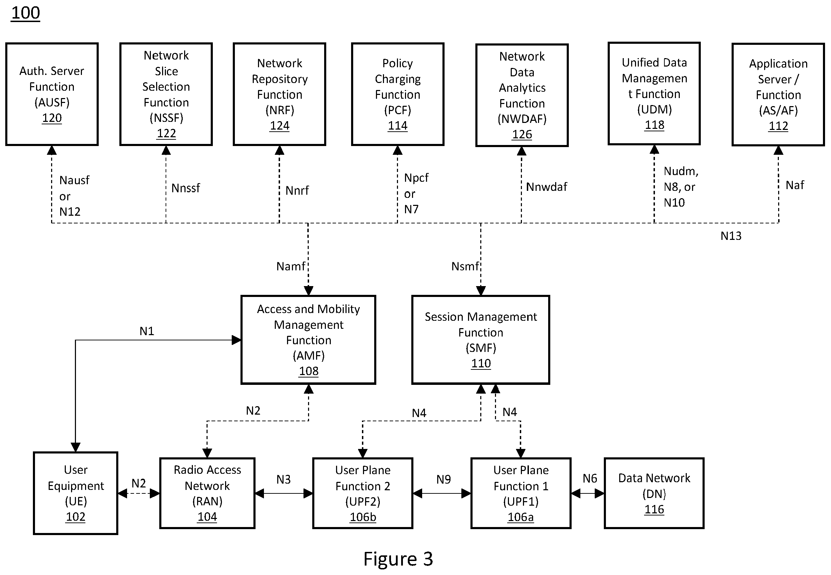

In the context of a 5G network, such as illustrated in FIG. 2 and FIG. 3, the communications network 100 can comprise a series of connected network devices and specialized hardware that is distributed throughout a service region, state, province, city, or country, and one or more network entities, which can be stored at and/or hosted by one or more of the connected network devices or specialized hardware. In some embodiments, the UE 102 can connect to the RAN 104, which can then relay the communications between the UE 102 and the CN 101, the CN 101 being connected to the DN 116, which can be in communication with one or more AS/AF 112. In some embodiments, the UE 102 can be in communication with a RAN 104, which can act as a relay between the UE 102 and other components or services of the CN 101. For instance, in some embodiments, the UE 102 can communicate with the RAN 104, which can in turn communicate with an Access and Mobility Management Function 108 (AMF 108). In other instance or embodiments, the UE 102 can communicate directly with the AMF 108. In some embodiments, the AMF 108 can be in communication with one or more network functions (NFs), such as an Authentication Server Function 120 (AUSF 120), a Network Slice Selection Function 122 (NSSF 122), a Network Repository Function 124 (NRF 124), a Policy Charging Function 114 (PCF 114), a Network Data Analytics Function 126 (NWDAF 126), a Unified Data Management function 118 (UDM 118), the AS/AF 112, a Session Management Function 110 (SMF 110), and/or the like.

In some embodiments, the SMF 110 can be in communication with one or more User Plane Functions 106 (UPF 106, UPF 106a, UPF 106b, collectively "UPF 106"). By way of example only, in some embodiments, the UPF 106 can be in communication with the RAN 104 and the DN 116. In other embodiments, the DN 116 can be in communication with a first UPF 106a and the RAN 104 can be in communication with a second UPF 106b, while the SMF 110 is in communication with both the first and second UPFs 106a, 106b and the first and second UPFs 106a, 106b are in communication each with the other.

In some embodiments, the UE 102 can comprise a single-mode or a dual-mode device such that the UE 102 can be connected to one or more RANs (e.g., RAN 104). In some embodiments, the RAN 104 can be configured to implement one or more Radio Access Technologies (RATs), such as Bluetooth, Wi-Fi, and Global System for Mobile Communication (GSM), Universal Mobile Telecommunications System (UMTS), LTE or 5G NR, among others, that can be used to connect the UE 102 to the CN 101. In some embodiments, the RAN 104 can comprise or be implemented using a chip, such as a silicon chip, in the UE 102 that can be paired with or otherwise recognized by a similar chip in the CN 101, such that the RAN 104 can establish a connection or line of communication between the UE 102 and the CN 101 by identifying and pairing the chip within the UE 102 with the chip within the CN 101. In some embodiments, the RAN 104 can implement one or more base stations, towers or the like to communicate between the UE 102 and the AMF 108 of the CN 101.

In some embodiments, the communications network 100 or components thereof (e.g., base stations, towers, etc.) can be configured to communicate with a communication device (e.g., the UE 102) such as a cell phone or the like over multiple different frequency bands, e.g., FR1 (below 6 GHz), FR2 (mm Wave), other suitable frequency bands, subbands thereof, and/or the like. In some embodiments, the communications network 100 can comprise or employ massive Multiple Input and Multiple Output (MIMO) antennas. In some embodiments, the communications network 100 can comprise Multi-User MIMO (MU-MIMO) antennas. In some embodiments, the communications network 100 can employ edge computing whereby the computing servers are communicatively, physically, computationally, and/or temporally closer to the communications device (e.g., UE 102) in order to reduce latency and data traffic congestion. In some embodiments, the communications network 100 can employ other technologies, devices, or techniques, such as small cell, low-powered RAN, beamforming of radio waves, Wi-Fi cellular convergence, Non-Orthogonal Multiple Access (NOMA), channel coding, the like, or combinations thereof.

As illustrated in FIG. 3, the UE 102 can be configured to communicate with the CN 101 in a N1 interface, e.g., according to a Non-Access Stratum (NAS) protocol. In some embodiments, RAN 104 can be configured to communicate with the CN 101 or a component thereof (e.g., the AMF 108) in a N2 interface, e.g., in a control plane between a base station of the RAN 104 and the AMF 108. In some embodiments, the RAN 104 can be configured to communicate with the UPF 106 in a N3 interface, e.g., in a user plane. In some embodiments, the AMF 108 and/or the SMF 110 can be configured to communicate with other services or network entities within the CN 101 in various different interfaces and/or according to various different protocols. For instance, in some embodiments, the AMF 108 and/or the SMF 110 can be configured to communicate with the AUSF 120 in a Nausf interface or an N12 interface. In some embodiments, the AMF 108 and/or the SMF 110 can be configured to communicate with the NSSF 122 in a Nnssf interface. In some embodiments, the AMF 108 and/or the SMF 110 can be configured to communicate with the NRF 124 in a Nnrf interface. In some embodiments, the AMF 108 and/or the SMF 110 can be configured to communicate with the PCF 114 in a Npcf interface or an N7 interface. In some embodiments, the AMF 108 and/or the SMF 110 can be configured to communicate with the NWDAF 126 in a Nnwdaf interface. In some embodiments, the AMF 108 and/or the SMF 110 can be configured to communicate with the UDM 118 in a Nudm interface, an N8 interface, or an N10 interface. In some embodiments, the AMF 108 and/or the SMF 110 can be configured to communicate with the AS/AF 112 in a Naf interface. In some embodiments, the SMF 110 can be configured to communicate with the UPF 106 in a N4 interface, which can act as a bridge between the control plane and the user plane, such as acting as a conduit for a Protocol Data Unit (PDU) session during which information is transmitted between, e.g., the UE 102 and the CN 101 or components/services thereof.

It will be appreciated that certain example embodiments described herein arise in the context of a telecommunications network, including but not limited to a telecommunications network that conforms to and/or otherwise incorporates aspects of a fifth-generation (5G) architecture. While FIGs. 1-3 illustrate various configurations and/or components of an example architecture of the communications network 100, many other systems, system configurations, networks, network entities, and pathways/protocols for communication therein are contemplated and considered within the scope of this present disclosure, as defined by the appended claims.

While the methods, devices/apparatuses, and computer program products/codes described herein are described within the context of a fifth-generation core network (5GC) and system, such as illustrated in FIGs. 1-3 and described hereinabove, the described methods, devices, and computer program products can nevertheless be applied in a broader context within any suitable telecommunications system, network, standard, and/or protocol. It will be appreciated that the described methods, devices, and computer program products can further be applied to yet undeveloped future networks and systems as would be apparent to one skilled in the art in light of the present disclosure.

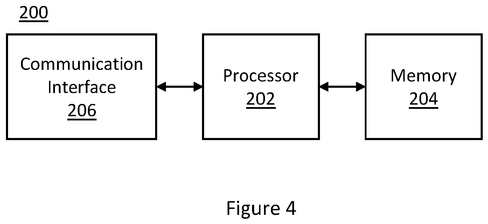

Turning now to FIG. 4, examples of an apparatus that may be embodied by the user equipment or by a network entity, such as server or other computing device are depicted in accordance with an example embodiment of the present disclosure. As described below in conjunction with the flowcharts and block diagrams presented herein, the apparatus 200 of an example embodiment can be configured to perform the functions described herein. In any instance, the apparatus 200 can more generally be embodied by a computing device, such as a server, a personal computer, a computer workstation or other type of computing device including those functioning as a user equipment and/or a component of a wireless network or a wireless local area network. Regardless of the manner in which the apparatus 200 is embodied, the apparatus of an example embodiment can be configured as shown in FIG. 4 so as to include, be associated with or otherwise be in communication with a processor 202 and a memory device 204 and, in some embodiments, and/or a communication interface 206.

Although not illustrated, the apparatus of an example embodiment may also optionally include a user interface, such as a touch screen, a display, a keypad, the like, or combinations thereof. Moreover, the apparatus according to example embodiments can be configured with a global positioning circuit that comprises a global positioning receiver and/or global positioning transmitter configured for communication with one or more global navigation satellite systems (e.g., Global Positioning System (GPS), GLONASS, Galileo, the like, or combinations thereof). The global positioning circuit may be configured for the transmission and/or receipt of direct/indirect satellite and/or cell signals in order to determine geolocation data (e.g., latitude, longitude, elevation, altitude, geographic coordinates, the like, or combinations thereof.) for the apparatus and/or another communication device associated with the apparatus or the one or more global navigation satellite systems.

The processor 202 (and/or co-processors or any other circuitry assisting or otherwise associated with the processor) can be in communication with the memory device 204 via a bus for passing information among components of the apparatus 200. The memory device can include, for example, one or more volatile and/or non-volatile memories, such as a non-transitory memory device. In other words, for example, the memory device can be an electronic storage device (e.g., a computer readable storage medium) comprising gates configured to store data (e.g., bits) that can be retrievable by a machine (e.g., a computing device like the processor). The memory device can be configured to store information, data, content, applications, instructions, the like, or combinations thereof for enabling the apparatus to carry out various functions in accordance with an example embodiment. For example, the memory device could be configured to buffer input data for processing by the processor. Additionally or alternatively, the memory device could be configured to store instructions for execution by the processor.

The apparatus 200 can, in some embodiments, be embodied in various computing devices as described above. However, in some embodiments, the apparatus can be embodied as a chip or chip set. In other words, the apparatus can comprise one or more physical packages (e.g., chips) including materials, components and/or wires on a structural assembly (e.g., a baseboard). The structural assembly can provide physical strength, conservation of size, and/or limitation of electrical interaction for component circuitry included thereon. The apparatus can therefore, in some cases, be configured to implement an embodiment of the present invention on a single chip or as a single "system on a chip." As such, in some cases, a chip or chipset can constitute means for performing one or more operations for providing the functionalities described herein.

The processor 202 can be embodied in a number of different ways. For example, the processor can be embodied as one or more of various hardware processing means such as a coprocessor, a microprocessor, a controller, a Digital Signal Processor (DSP), a processing element with or without an accompanying DSP, or various other circuitry including integrated circuits such as, for example, an Application Specific Integrated Circuit (ASIC), a Field Programmable Gate Array (FPGA), a Micro-Controller Unit (MCU), a hardware accelerator, a special-purpose computer chip, or the like. As such, in some embodiments, the processor can include one or more processing cores configured to perform independently. A multi-core processor can enable multiprocessing within a single physical package. Additionally or alternatively, the processor can include one or more processors configured in tandem via the bus to enable independent execution of instructions, pipelining and/or multithreading.

In an example embodiment, the processor 202 can be configured to execute instructions stored in the memory device 204 or otherwise accessible to the processor. Alternatively or additionally, the processor can be configured to execute hard coded functionality. As such, whether configured by hardware or software methods, or by a combination thereof, the processor can represent an entity (e.g., physically embodied in circuitry) capable of performing operations according to an embodiment of the present disclosure while configured accordingly. Thus, for example, when the processor is embodied as an ASIC, FPGA, the like, or combinations thereof the processor can be specifically configured hardware for conducting the operations described herein. Alternatively, as another example, when the processor is embodied as an executor of instructions, the instructions can specifically configure the processor to perform the algorithms and/or operations described herein when the instructions are executed. However, in some cases, the processor can be a processor of a specific device (e.g., an encoder and/or a decoder) configured to employ an embodiment of the present invention by further configuration of the processor by instructions for performing the algorithms and/or operations described herein. The processor can include, among other things, a clock, an Arithmetic Logic Unit (ALU) and logic gates configured to support operation of the processor.

In embodiments that include a communication interface 206, the communication interface can be any means such as a device or circuitry embodied in either hardware or a combination of hardware and software that is configured to receive and/or transmit data from/to a network and/or any other device or module in communication with the apparatus 200, such as NF, NRF, a base station, an access point, SCP, UE 102, RAN 104, core network services, AS/AF 112, a database or other storage device, the like, or combinations thereof. In this regard, the communication interface can include, for example, one or more antennas and supporting hardware and/or software for enabling communications with a wireless communication network. Additionally or alternatively, the communication interface can include the circuitry for interacting with the one or more antennas to cause transmission of signals via the one or more antennas or to handle receipt of signals received via the one or more antennas. In some embodiments, the one or more antennas may comprise one or more of a dipole antenna, monopole antenna, helix antenna, loop antenna, waveguide, horn antenna, parabolic reflectors, corner reflectors, dishes, micro strip patch array, convex-plane, concave-plane, convex-convex, concave-concave lenses, the like or combinations thereof.

In some environments, the communication interface can alternatively or also support wired communication. As such, for example, the communication interface can include a communication modem and/or other hardware/software for supporting communication via cable, Digital Subscriber Line (DSL), USB, the like or combinations thereof. In some embodiments, a session management function (e.g., SMF 110) can comprise a 5GC session management function for any suitable Control and User Plane Separation (CUPS) architecture, such as for the General Packet Radio Service (GPRS), Gateway GPRS Support Node Control plane function (GGSN-C), Trusted Wireless Access Gateway Control plane function (TWAG-C), Broadband Network Gateway Control and User Plane Separation (BNG-CUPS), N4-Interface, Sxa-Interface, Sxb-Interface, Sxc-Interface, Evolved Packet Core (EPC) Serving Gateway Control plane function (SGW-C), EPC Packet Data Network Gateway Control plane function (PGW-C), EPC Traffic Detection Control plane function (TDF-C), the like, or combinations thereof.

As illustrated, the apparatus 200 can include a processor 202 in communication with a memory 204 and configured to provide signals to and receive signals from a communication interface 206. In some embodiments, the communication interface 206 can include a transmitter and a receiver. In some embodiments, the processor 202 can be configured to control the functioning of the apparatus 200, at least in part. In some embodiments, the processor 202 can be configured to control the functioning of the transmitter and receiver by effecting control signaling via electrical leads to the transmitter and receiver. Likewise, the processor 202 can be configured to control other elements of apparatus 200 by effecting control signaling via electrical leads connecting the processor 202 to the other elements, such as a display or the memory 204.

The apparatus 200 can be capable of operating with one or more air interface standards, communication protocols, modulation types, access types, and/or the like. Signals sent and received by the processor 202 can include signaling information in accordance with an air interface standard of an applicable cellular system, and/or any number of different wireline or wireless networking techniques, comprising but not limited to Wi-Fi, Wireless Local Access Network (WLAN) techniques, such as Institute of Electrical and Electronics Engineers (IEEE) 802.11, 802.16, 802.3, Asymmetric Digital Subscriber Line (ADSL), Data Over Cable Service Interface Specification (DOCSIS), the like, or combinations thereof. In addition, these signals can include speech data, user generated data, user requested data, the like, or combinations thereof.

For example, the apparatus 200 and/or a cellular modem therein can be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, Internet Protocol Multimedia Subsystem (IMS) communication protocols (for example, Session Initiation Protocol (SIP)), the like, or combinations thereof. For example, the apparatus 200 can be capable of operating in accordance with 2G wireless communication protocols Interim Standard (IS) 136 (IS-136), Time Division Multiple Access (TDMA), GSM, IS-95, Code Division Multiple Access, Code Division Multiple Access (CDMA), the like, or combinations thereof. In addition, for example, the apparatus 200 can be capable of operating in accordance with 2.5G wireless communication protocols GPRS, Enhanced Data GSM Environment (EDGE), the like, or combinations thereof. Further, for example, the apparatus 200 can be capable of operating in accordance with 3G wireless communication protocols, such as UMTS, Code Division Multiple Access 2000 (CDMA2000), Wideband Code Division Multiple Access (WCDMA), Time Division-Synchronous Code Division Multiple Access (TD-SCDMA), the like, or combinations thereof. The NA 200 can be additionally capable of operating in accordance with 3.9G wireless communication protocols, such as Long Term Evolution (LTE), Evolved Universal Terrestrial Radio Access Network (E-UTRAN), the like, or combinations thereof.

Additionally, for example, the apparatus 200 can be capable of operating in accordance with 4G wireless communication protocols, such as LTE Advanced, 5G, and/or the like as well as similar wireless communication protocols that can be subsequently developed. In some embodiments, the apparatus 200 can be capable of operating according to or within the framework of any suitable CUPS architecture, such as for the gateway GGSN-C, TWAG-C, Broadband Network Gateways (BNGs), N4-Interface, Sxa-Interface, Sxb-Interface, Sxc-Interface, EPC SGW-C, EPC PGW-C, EPC TDF-C, the like, or combinations thereof. Indeed, although described herein in conjunction with operation with a 5G system, the apparatus and method may be configured to operate in conjunction with a number of other types of systems including systems hereinafter developed and implemented.

Some of the embodiments disclosed herein can be implemented in software, hardware, application logic, or a combination of software, hardware, and application logic. The software, application logic, and/or hardware can reside on memory 204, the processor 202, or electronic components, for example. In some example embodiments, the application logic, software or an instruction set is maintained on any one of various conventional computer-readable media. In the context of this document, a "computer-readable medium" can be any non-transitory media that can contain, store, communicate, propagate or transport the instructions for use by or in connection with an instruction execution system, apparatus, or device, such as a computer or data processor circuitry, with examples depicted at FIG. 4. The computer-readable medium can comprise a non-transitory computer-readable storage medium that can be any media that can contain or store the instructions for use by or in connection with an instruction execution system, apparatus, or device, such as a computer.

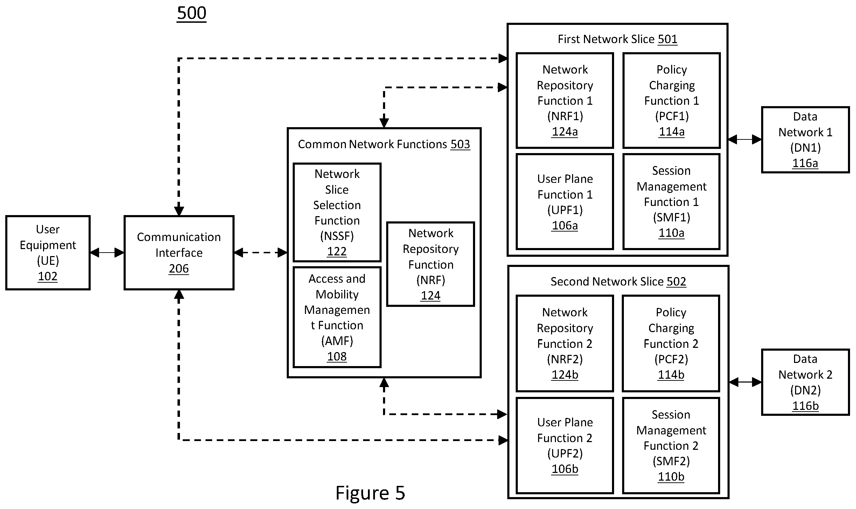

FIG. 5 illustrates an example communications network 500 that comprises two example network slices. The UE 102 utilizes at least Communication Interface 206 to establish one or more network connections by way of causing transmission and receipt of communication signals between the UE 102 via at least Communication Interface 206 and the Common Network Functions 503, the First Network Slice 501, and/or the Second Network Slice 502. It will be appreciated that, in some embodiments, the Communication Interface 206 can connect the UE 102 directly to the First Network Slice 501 and/or the Second Network Slice 502 thus bypassing the Common Network Functions 503. Additionally, it will be appreciated that Communication Interface 206 can connect the UE 102 indirectly to the First Network Slice 501 and/or the Second Network Slice 502 by establishing a connection through the Common Network Functions 503 first.

In some embodiments, UE 102 can connect to a plurality of public and/or private networks and/or a plurality of public and/or private network slices by way of Communication Interface 206. In some embodiments, Communication Interface 206 may be communicably connected to one or more of a RAN (e.g., RAN 104), cell, gNB, ng-eNB, NodeB, the like, or combinations thereof such that communication signals can be transmitted and received therethrough. The RAN nodes (e.g., gNB, ng-eNB, NodeB) may be configured to exchange network slice support information (e.g., S-NSSAI, NSSAI, etc.) per one or more TAs over at least an Xn interface during Xn set-up procedures and/or next-generation radio access network (NG-RAN) node configuration procedures (e.g., update procedures).

In the illustrated embodiment, the First Network Slice 501 comprises a plurality of network functions including at least Network Repository Function 1 (NRF1) 124a, Policy Charging Function 1 (PCF1) 114a, User Plane Function 1 (UPF1) 106a, and Session Management Function 1 (SMF1) 110a. Each of the network functions of the First Network Slice 501 is independent of the Common Network Functions 503 and the network functions of the Second Network Slice 502. Further, the First Network Slice 501 is configured to connect the UE 102 to Data Network 1 (DN1) 116a. The Second Network Slice 502 comprises a plurality of network functions including at least Network Repository Function 2 (NRF2) 124b, Policy Charging Function 2 (PCF2) 114b, User Plane Function 2 (UPF2) 106b, and Session Management Function 2 (SMF2) 110b. Each of the network functions of the Second Network Slice 502 is independent of the Common Network Functions 503 and the network functions associated with the First Network Slice 501. Further, the Second Network Slice 502 is configured to connect the UE 102 to Data Network 2 (DN2) 116b.

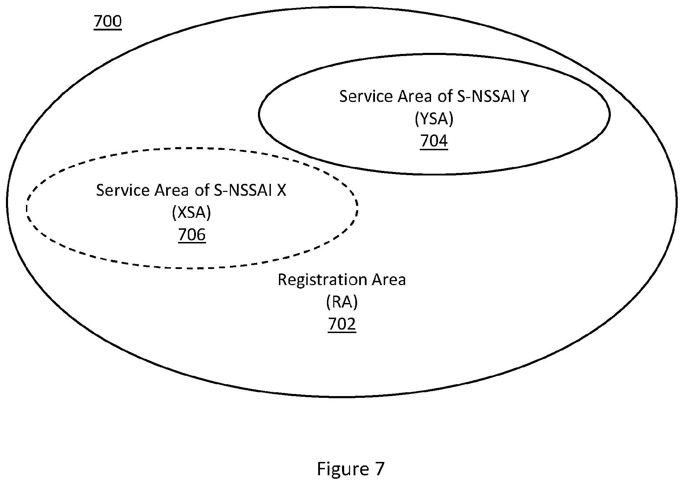

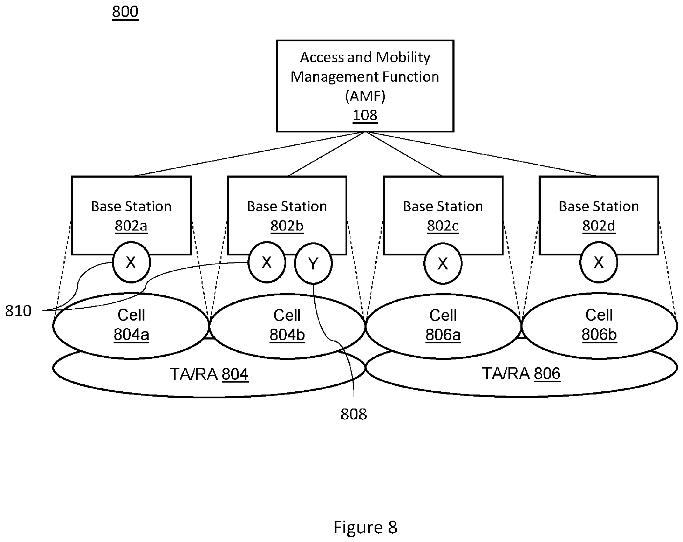

The First Network Slice 501 and the Second Network Slice 502 may be at least partially configured in accordance with one or more configurations of network slice X and/or network slice Y as described herein with respect to at least FIGs. 7-10. For example, the First Network Slice 501 may be configured in accordance with network slice X, S-NSSAI X (e.g., S-NSSAI X 810 described below with respect to at least FIG. 8), and any associated areas (e.g., XSA 706 described below with respect to at least FIG. 7). The Second Network Slice 502 may be configured in accordance with network slice Y, S-NSSAI Y (e.g., S-NSSAI Y 808 described below with respect to at least FIG. 8), and any associated areas (e.g., YSA 704 described below with respect to at least FIG. 7).

In some embodiments, a particular network slice may be served via one or more frequency bands, one or more cells, and/or one or more base stations dedicated to the particular network slice in a respective area (e.g., RA, TA, SA, etc.). When an additional network slice is added to the respective area, one or more additional frequency bands, cells, base stations, and/or TAC/TAIs may be assigned to the respective area covered by the additionally added network slice. One or more TAC configurations and/or one or more associated TA configurations of a first area may be mapped to a second area where additional services are offered (e.g., eMBB services) that are not offered in the first area. The first area may be a subset of the second area. The second area may be a subset of the first area.

In some embodiments, the example communications network 500 of FIG. 5 comprises one or more of a Public Land Mobile Network (PLMN), Stand-Alone Non-Public Network (SNPN), a Public Network Integrated NPN (PNI-NPN), and/or the like. For example, the First Network Slice 501 may be configured, with Common Network Functions 502, as part of a PLMN such that UE 102 can access the First Network Slice 501 without undergoing, at least some, onboarding procedures or authentication of credentials. Additionally, the Second Network Slice 502 may be configured as a PNI-NPN which operates with the support of the PLMN, that comprises the First Network Slice 501 and Common Network Functions 502, but further requires that UE 102 belongs to a particular tenant type in order to be eligible to use the Second Network Slice 502. Moreover, to access the Second Network Slice 502 UE 102 will have to undergo an onboarding procedure and/or authentication of credentials that incorporates the credentials associated with UE 102 and one or more Service Level Agreements (SLAs) and/or subscriptions.

In an instance UE 102 is already subscribed to the Second Network Slice 502 then procedures for authentication of credentials may be initiated, by UE 102 or the Second Network Slice 502, without the need for additional onboarding procedures or registration procedures. It will also be appreciated that the First Network Slice 501 and/or the Second Network Slice 502 may be configured, in accordance with some embodiments, as a network separate from example communications network 500, rather than as a network slice, such as an SNPN that supports authentication and/or onboarding procedures. Moreover, in some embodiments a plurality of additional network slices (e.g., a third network slice, fourth network slice, etc.) may be incorporated into example communications network 500 with each network slice configured with or without authentication feature requirements, with or without onboarding features for unregistered user equipment, and/or a plurality of network functions (e.g., an NRF, UPF, PCF, SMF, AS/AF, AUSF, DN, etc.).

A respective network slice may be configured to provide one or more respective services to UE 102, or the like as described herein, that is not offered by one or more other network slices. A respective network slice may be served by one or more cells, base stations, and/or the like of the RAN 104 as shown in FIGs. 1-3 and described above. One or more respective network slices, cells, base stations, and/or other network entities and/or infrastructure components as described above may be associated with one or more respective RAs, cellular coverage areas, TAs, Service Areas (SAs), or the like as described herein. One or more respective network slices (or functions thereof), cells, base stations, and/or other network entities and/or infrastructure components may be forbidden, locked, restricted, or otherwise made unavailable to one or more UEs within a respective RA, cellular coverage area, TA, SA, or the like as described herein. One or more respective network slices (or functions thereof), cells, base stations, and/or other network entities and/or infrastructure components may be allowed, unlocked, accessible, or otherwise made available to one or more UEs within a respective RA, cellular coverage area, TA, SA, or the like as described herein.

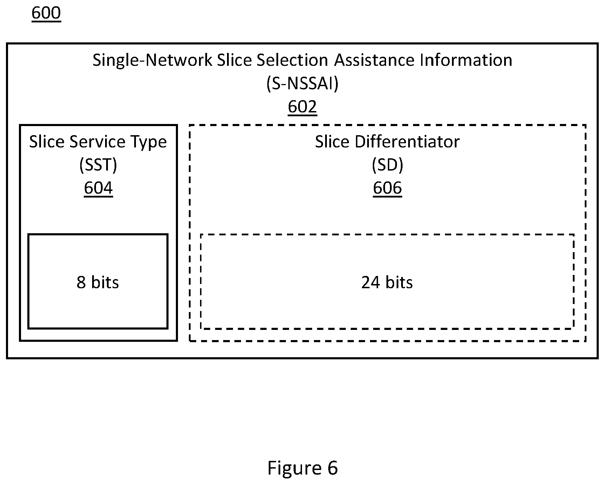

FIG. 6 is a block diagram illustrating an example Single-Network Slice Selection Assistance Information (S-NSSAI) format 600, according to some embodiments. As illustrated in FIG. 6, S-NSSAI 602 is configured according to S-NSSAI format 600. A network slice (e.g., First Network Slice 501 or Second Network Slice 502 as described above with respect to FIG. 5) may be uniquely identified via a respective S-NSSAI, such as S-NSSAI 602. A UE may be simultaneously connected and served by at a plurality of S-NSSAIs. A cell may support a plurality of S-NSSAIs and a TA may support a plurality of network slices via one or more serving cells. The S-NSSAI 602 may comprise one or more of a Slice Service Type (SST) 604 portion or a Slice Differentiator (SD) 606 portion.

The SST 604 may comprise approximately 8 bits of data configured to indicate at least a service type associated with a respective network slice. The SST 606 portion may have standardized and/or non-standardized values, such as values ranging between 0 and 127 may belong to a standardized SST range. For example, a value of 1 in the SST 606 portion may indicate that the associated network slice of S-NSSAI 602 is suitable for handling of 5G eMBB. Additionally, for example, a value of 2 in the SST 606 portion may indicate that the associated network slice of S-NSSAI 602 is suitable for handling of URLLC. A respective value in the SST 606 portion may indicate that the associated network slice of S-NSSAI 602 is suitable or non-suitable for handling of particular services, functions, or the like associated with, for example a respective network, RA, TA, or the like.

The SD 606 may comprise approximately 24 bits of data configured to indicate a respective network slice from among a plurality of network slices associated with a particular area (e.g., TA, RA, etc.). The SD 606 portion may be defined according to one or more of an MNO, a PLMN (e.g., Home PLMN (HPLM), etc.), or other governing entity (e.g., standards organization, government, etc.) within a particular region or area. The S-NSSAI 602 may comprise one or more additional portions (not shown) comprising one or more additional bits (not shown) to facilitate identification of an RA, TA, network slice, service, cell, beam, RAN, and/or any other network entity described herein to a UE and/or another network entity associated therewith. One or more S-NSSAI as described below (e.g., S-NSSAI Y 808, S-NSSAI X 810 or the like) may be at least partially configured as described above with respect to S-NSSAI format 600 and/or S-NSSAI 602.

FIG. 7 is a block diagram illustrating an example deployment area 700 associated with a communications network (e.g., communications network 100 and/or 500 as described above), in accordance with some example embodiments. The deployment area 700 comprises RA 702, Service Area of S-NSSAI Y (YSA) 704, and Service Area of S-NSSAI X (XSA) 704. The RA 702 may be configured as a plurality of TAs that support the one or more network slices (e.g., First Network Slice 501 or Second Network Slice 502 as described above with respect to FIG. 5). The respective network slice of the one or more network slices may be identified by a respective S-NSSAI (e.g., S-NSSAI 602 as described above with respect to FIG. 6). For example, network slice Y (not shown) may be identified by S-NSSAI Y (not shown) and a UE (e.g., UE 102) may have access to the service of network slice Y when located within YSA 704. Another network slice, network slice X (not shown) may be identified by S-NSSAI X (not shown) and a UE (e.g., UE 102) may have access to the service of network slice X when located within XSA 706. The RA 702 may comprise one or more additional service areas, tracking areas, and/or the like as described herein in association with one or more additional network slices and additional S-NSSAI.

An SA (e.g., YSA 704, XSA 706, etc.) may be a proper subset of RA 702. An SA (e.g., YSA 704, XSA 706, etc.) may be separate from, or overlapping with, another SA. For example, YSA 704 may at least partially overlap with XSA 706. An SA (e.g., YSA 704, XSA 706, etc.) may be a proper subset of another SA. For example, XSA 706 may be configured to be within YSA 704. The RA 702 may be identified by a Tracking Area Identity (or Tracking Area Identifier) (TAI) list indicating one or more TAIs and/or Tracking Area Codes (TACs). Upon detection of a UE within RA 702, at least the UE and/or a core network (e.g., CN 101) associated with the RA 702 may cause one or more network entities to perform RA update procedures and/or TA update procedures. Upon detection that a UE has move outside of RA 702, at least the UE may cause one or more network entities to perform RA update procedures and/or TA update procedures for another RA. Based on S-NSSAI transmitted to the UE, the UE may determine that it may have access to one or more network slices associated with a SA within the RA. For example, a UE may determine that it may access a first network slice associated with a first SA and the UE may determine that it may not access a second network slice associated with a second SA.

According to example embodiments of the present disclosure, a UE may be blocked from accessing, or otherwise using, respective S-NSSAI for a respective network slice when the UE is not located in the service area of the respective S-NSSAI. For example, a UE may be blocked from using network slice Y when the UE is not located within YSA 704. The UE may be blocked from network slice Y by using a barring factor associated with an operator-specific access category. The barring factor may be associated with an S-NSSAI and may be set to 0 within the RA outside of the respective SA. For example, the barring factor for S-NSSAI Y may be set to 0 within the portions of RA 702 not covered by YSA 704, preventing a UE from receiving S-NSSAI Y and further preventing the UE from connecting to network slice Y within RA 702 at least when outside of YSA 704.

The UE may be blocked from receiving respective S-NSSAI when outside of a supported SA. An AMF (e.g., AMF 108) may be configured to block S-NSSAI from being sent to, or received by, a UE based on at least a location or cell associated with the UE. The AMF may send updated allowed NSSAI to a UE, not including S-NSSAI Y, when the UE moves out of the YSA 704. The AMF may send updated allowed NSSAI, including S-NSSAI Y, when the UE moves into YSA 704. An SA may be associated with a respective cell or base station (e.g., gNB) of a RAN (e.g., RAN 104) and the AMF may determine which S-NSSAI to include in the NSSAI based on the respective cell or base station.

The NSSAI mapping over Next Generation Application Protocol (NGAP) associated with a base station (e.g., gNB), and/or a cell identifier, may be used as a trigger condition for the AMF to send updated allowed NSSAI (e.g., including or excluding particular S-NSSAI).
If the a SA cannot be described as a set of RAN nodes (e.g., gNB) then the NGAP may be adjusted, during the NG Setup procedure and NG configuration update procedure, so that the RAN node may cause transmission of supported respective S-NSSAI per each respective cell. For example, a first cell of a gNB may belong to YSA 704 and a second cell of the gNB may belong to XSA 706, the gNB may cause transmission of a message reporting the association of the first cell and the second cell to the AMF or another network entity. The AMF may configure and/or send updated allowed NSSAI based on the cell associated with a UE. The RAN may be configured to cause transmission of a network slice area notification, such as a RAN notification for RRC_INACTIVE + NGAP, from a node of the RAN to the AMF. For example, a UE may be communicably connected to a gNB via a first cell, supporting YSA 704, and the UE may move to a second cell of the gNB, supporting XSA 706. Based on this change from the first cell to the second cell of the gNB, the gNB may cause transmission of a notification message (e.g., one or more RRC messages) to at least the AMF indicating the network slice support changes to at least the AMF.

In response to the AMF determining that the network slice support has changed for a UE (e.g., based on NSSAI mapping over NGAP or RAN notification messages as described above) mobile traffic communications procedures may be adjusted for the UE. For example, when the UE is located in a particular SA (e.g., YSA 704, XSA 706), the UE may be allowed (e.g., by the gNB, AMF, etc.) to complete Mobile Originated (MO) traffic associated with a particular network slice (e.g., network slice Y, X) or associated S-NSSAI. However, when the UE is outside of the particular SA, it won't be able to originate traffic for the particular network slice and/or associated S-NSSAI, because when the UE transitions to a connected mode and attempts to reactivate any PDU session associated with the particular S-NSSAI, the reactivation will fail outside of the particular SA. For example, while inside YSA 704 the UE can be configured to complete MO traffic associated with network slice Y and/or S-NSSAI Y, outside of YSA 704 the UE will fail to complete MO traffic or reactivate the PDU session for S-NSSAI Y.

Moreover, for Mobile Terminated (MT) traffic, when the UE is located outside of a particular SA (e.g., YSA 704, XSA 706), the AMF may be configured not to page the UE for downlink data associated with a PDU session associated with the S-NSSAI for the particular SA. For RAN nodes (e.g., gNB) with uniform cell support, the AMF can identify a particular SA via NGAP procedures. For RAN nodes (e.g., gNB) with non-uniform cell support (e.g., different cells of the same gNB support different SAs), the AMF can identify a support for a particular SA via network slice support information received/retrieved from the RAN node for associated cells. For example, a gNB with a first cell supporting YSA 704 and a second cell supporting XSA 706 will cause transmission of a network slice support information message to at least the AMF and based on at least the network slice support information message the AMF will not page the UE for downlink data associated with a PDU session associated with one or more of YSA 704 or XSA 706.

The AMF may not page the UE for downlink data based on a location of the UE, for example determined from at least communications between the UE and a particular cell. The UE mobility may be controlled by a network (e.g., PLMN, etc.), or an entity thereof (e.g., AMF, SMF, etc.). The allowed NSSAI comprising allowed S-NSSAI for a particular area (e.g., RA, SA, TA, etc.) may be modified, updated, or otherwise altered (e.g., by the network or an entity thereof) to block and/or allow access to particular network slices after a path switch associated with a UE and a determination of the UE's location (e.g., based on GPS, gNB/cell communications or identities, or other methods for location determination described herein). In some embodiments, access to a particular network slice may be allowed and/or restricted to a UE by deploying an SNPN, PNI-NPN, and/or similar private network within a particular SA. For example, YSA 704 may be serviced by a PNI-NPN that is configured to only allow service to predefined (e.g., by an allowed UE list accessible to the PNI-NPN) and/or preconfigured UEs (e.g., preconfigured with the required credential(s) prior to entering YSA 704) or to UEs that are allowed/configured to perform the necessary onboarding and/or configuration to receive service from the PNI-NPN while located in YSA 704.

FIG. 8 is a block diagram illustrating example deployment area 800 associated with a communications network (e.g., communications network 100 and/or 500 as described above), in accordance with some example embodiments. The deployment area 800 comprises AMF 108, Base Station 802a, Base Station 802b, Base Station 802c, Base Station 802d, Cell 804a, Cell 804b, Cell 804c, Cell 804d, TA/RA 804, and TA/RA 806. The plurality of base stations (e.g., Base Station 802a, 802b, 802c, 802d) may be associated with one or more RANs (e.g., RAN 104) and may comprise one or more RAN nodes (e.g., gNB or the like). One or more base stations may be configured to transmit and/or receive messages with one or more other base stations via one or more interfaces (e.g., an Xn interface, etc.). For example, Base Station 802a may be communicably interfaced with Base Station 802b via at least an Xn interface and Base Station 802a may cause transmission of, for example, network slice support information to Base Station 802b.

The AMF 108 may cause transmission to a respective base station of NSSAI comprising one or more S-NSSAI associated with a particular network slice (e.g., network slice X, network slice Y, or other network slices), such as described above with respect to FIG. 7. One or more base stations (e.g., Base Station 802a, etc.) may provide cell or UE location/connection information to the AMF 108, such as described above with respect to FIG. 7. The deployment area 800 may uniformly support one or more network slices (e.g., network slice X) throughout an entire/particular TA/RA (e.g., TA/RA 806). The deployment area 800 may support one or more network slices (e.g., network slice Y) non-uniformly throughout a particular TA/RA (e.g., TA/RA 804). A respective cell (e.g., Cell 804b, etc.) may provide service to a respective SA (not shown) associated with a respective TA/RA (e.g., TA/RA 804, etc.). For example, Base Station 802a may provide service, via at least Cell 804a, to XSA 706 as shown in FIG. 7 and described above.

As shown, Cell 804a and Cell 804b cover respective SA (not shown) portions of TA/RA 804 and Cell 806a and Cell 806b cover respective SA (not shown) portions of TA/RA 806. Network slice X (not shown) is served by Base Station 802a, 802b, 802c, and 802d for their respective cells. The S-NSSAI X 810 may be transmitted by Base Station 802a, 802b, 802c, and 802d to UEs within their respective cells. Network slice Y (not shown) is served by Base Station 802b within Cell 804b. The S-NSSAI Y 808 may be transmitted via at least Base Station 802b to UEs within Cell 804b and the S-NSSAI Y 808 is blocked from being transmitted via Base Station 802a, 802c, and 802d. The AMF 108 may determine, such as by NGAP procedures, which S-NSSAI may be transmitted via at least a respective base station (e.g., gNB, etc.) and/or a respective cell to one or more UEs (e.g., authorized to use the S-NSSAI).

With regards to FIG. 8, when one or more UEs that are authorized to access and use services of, for example, network slice Y are outside of the SA (e.g., YSA 704 as shown in FIG. 7) of network slice Y, or in other words outside of the SA covered by Cell 804b of Base Station 802b, the UE may be prevented from receiving and/or requesting services from network slice Y. The UE may be prevented from receiving and/or requesting services from, for example, network slice Y via one or more base stations (e.g., gNB) configured to cause transmission of Unified Access Control (UAC) Operator Defined Access Categories (ODACs). One or more definitions associated with at least one ODAC may be transmitted to the UE during the registration procedures (e.g., RRC registration, etc.). The UE may be prevented from receiving and/or requesting services from a network slice by at least an AMF. The AMF providing (e.g., causing transmission of) allowed NSSAI and/or allowed S-NSSAI to the UE, via a base station, the allowed NSSAI and/or allowed S-NSSAI indicating to the UE non-uniform network slice support that are allowed in a respective TA/RA. The allowed NSSAI and/or allowed S-NSSAI may be transmitted to the UE but the UE may require additional authorization credentials associated with a subscription before the UE may receive service from the network slice.

Service enabler methods, such as described above (e.g., UAC ODAC, allowed NSSAI, subscription authorization, and/or other methods for providing non-uniform network slice services within a TA/RA) may be leveraged to indicate to an authorized UE, for example, in TA/RA 804 that it is allowed NSSAI associated with network slice X and network slice Y. Moreover, when the UE requests access and/or services from network slice X anywhere in TA/RA 804 the UE will be granted access, whether via at least Base Station 802a or 802b. However, the UE may only be granted access and/or services from network slice Y while in the SA associated with Base Station 802b, and/or Cell 804b, whereas within the SA associated with Base Station 802a, and/or Cell 804a, access and/or services from network slice Y will be barred.

Barring the access and/or services for network slice Y may be caused by at least configuring Base Station 802a (e.g., a gNB) to cause transmission (e.g., broadcast, transmit via a beam and/or cell, etc.) of a unique ODAC to the UE within the associated SA. Moreover, barring the access and/or services for network slice Y may be caused by at least configuring the AMF 108 to provide the UE with ODAC definitions (e.g., during registration procedures, etc.) which causes mapping of the network slice Y to a particular Access Category (AC). With the network slice Y mapped to a particular AC when the UE causes initiation of a service request for network slice Y (e.g., via one or more procedures for PDU session establishment and/or modification) via Base Station 802a, the UE may at least execute a check for Access Control/Barring. The UE may at least determine that the network slice Y is associated with the particular AC (e.g., an AC that Base Station 802a may broadcast/transmit) is barred and hence access to network slice Y (e.g., via at least Base Station 802a) is barred (e.g., locked, blocked, restricted, protected, etc.).

If the UE moves into the SA of Base Station 802b, access to network slice Y may be granted based on a determination that Base Station 802b does not broadcast/transmit Access Control/Barring information related to network slice Y. The Base Station 802b may broadcast/transmit information (e.g., NSSAI, etc.) reflecting that the Base Station 802b, or a cell thereof (e.g., Cell 804b) does support communications between at least the UE and network slice Y. If the UE moves into TA/RA 806, during the registration procedure, the AMF 108 may cause transmission of an allowed value of NSSAI = X (e.g., based on at least a determination that network slice Y is not supported in TA/RA 806). In response, the UE may not request establishment of one or more PDU sessions for network slice Y based on a determination that network slice Y is not indicated/reflected via the allowed NSSAI received by the UE. The UE may request (e.g., cause transmission of a request message via the RAN 104 to the AMF 108) for establishment of one or more PDU sessions for network slice X based on a determination that network slice X is indicated/reflected via the allowed NSSAI received from the AMF 108.

A UE may have an established PDU session associated with network slice Y within the SA associated with Base Station 802b, or a cell thereof, the UE may move to the SA associated with Base Station 802a and this move may be detected as a trigger condition for one or more handover events based on an associated mobility mode. For example, based on a connected mode mobility state, the Base Station 802a may reject one or more PDU sessions requests received from the UE that are associated with network slice Y. Moreover, the one or more PDU sessions associated with network slice Y may be rejected based on a determination that network slice Y is not supported via Base Station 802a, and based on an idle mode mobility state, the UE may be barred from getting access based on the ODACs, such as described above. One or more service or features associate with network slice Y may be mapped onto network slice X in a limited area (e.g., XSA 706, an overlapping SA between XSA 706 and YSA 704, and/or a portion of one or more TAs/RAs).

A UE may have an established PDU session for network slice Y within the SA associated with Base Station 802b, or a cell thereof, the UE may exit TA/RA 804 and move into TA/RA 806 the following will happen depending on the mobility mode. In the connected mode mobility state, Base Station 802c and Base Station 802d of the TA/RA 806 will cause rejection of the PDU sessions associated with network slice Y since network slice Y is not supported in TA/RA 806 by either Base Station 802c or Base Station 802d. The UE may obtain an additional allowed NSSAI comprising S-NSSAI for network slice X since network slice X is support within TA/RA 806. In the idle mode mobility state, the UE may not request establishment, or reestablishment, of PDU sessions for network slice Y because network slice Y is not included as part of the additional allowed NSSAI for TA/RA 806.

The ODAC definition(s) which may be configured by at least the AMF 108 are configured to facilitate enablement and/or association of one or more of an S-NSSAI, a Data Network Name (DNN), or an Application Identifier with a respective AC value that can be configured to be broadcast from specific base station (e.g., RAN node, gNB, etc.). An ODAC definition message may comprise multiple definitions and at least an associated precedence (e.g., prioritization, ranking, scale, etc.) values, for respective definitions, that inform (e.g., indicate, identify, etc.) the UE in which order the definitions may be evaluated.

For example, a UE within the SA associated with Base Station 802a may attempt to transmit a service request message (e.g., to Base Station 802a and/or a network) to establish a PDU session for both network slice X and network slice Y the precedence/prioritization order may indicate that the network slice X definition(s) is evaluated before the network slice Y definition(s). The precedence/prioritization order may be configured to prevent barring of a service request associated with at least one barred network slice and at least one allowed network slice. For example, to prevent the access attempt that is associated with both network slice X and network slice Y from being barred based on one or more network configurations for barring network slice Y in the SA associated with Base Station 802a, the precedence/prioritization order indicates that network slice X definition(s) are evaluated prior to network slice Y definitions since network slice Y is at least barred in one or more SA of TA/RA 804. Network slice X may be evaluated first and then the access attempt may be allowed since it may be mapped to an AC for network slice X and not an AC for network slice Y.

The precedence/prioritization order may be configured by AMF 108 based on predefined SA restrictions for one or more network slices (e.g., network slice Y). The AMF 108 may support the configuration of the ODAC definitions. The AMF 108 may cause transmission of the allowed NSSAI that may be configured with a plurality of S-NSSAI for multiple network slices associated with a TA/RA (e.g., TA/RA 804) associated with non-uniform network slice support. One or more ODAC definitions may be transmitted to the UE (e.g., via a RAN node/base station from the AMF) as part of a registration procedure and/or a UE configuration update procedure.

The base station (e.g., gNB or other RAN node described herein) may be configured to support transmission and receipt of ODACs and ODAC definitions with respect to one or more other network entities (e.g., UE 102, AMF 108, CN 101, etc.). Each respective base station of a plurality of base stations covering one or more SAs of a TA/RA may not need to be configured with the same network slice configurations. Two or more base stations may cover at least a portion of the same SA. A base station may be configured to cover a plurality of SAs via one or more cells and/or one or more beams.

The AMF may configure and/or cause transmission of a list of allowed NSSAI (e.g., an updated NSSAI list) including, for example, S-NSSAI Y (or another respective S-NSSAI) based on one or more trigger criteria. For example, the AMF may detect/determine that a UE was handed over to a gNB in the YSA 704 from a gNB in the XSA 706 and this trigger criteria may cause the AMF to cause transmission of a list of allowed NSSAI (e.g., comprising S-NSSAI Y) to the UE in YSA 704. The AMF may detect/determine that a UE with allowed NSSAI not including S-NSSAI Y has performed a service request procedure in, for example, YSA 704 (or another respective SA) and this trigger criteria may cause the AMF to cause transmission of a list of allowed NSSAI (e.g., comprising S-NSSAI Y) to the UE for YSA 704.

The AMF may configure and/or cause transmission of a list of allowed NSSAI (e.g., an updated NSSAI list) not including (e.g., blocking), for example, S-NSSAI Y (or another respective S-NSSAI) based on one or more trigger criteria. For example, the AMF may detect/determine that a UE was handed over to a gNB in the XSA 706 from a gNB in the YSA 704 and this trigger criteria may cause the AMF to cause transmission of a list of allowed NSSAI (e.g., blocking S-NSSAI Y) to the UE in XSA 706. The AMF may detect/determine that a UE with allowed NSSAI including S-NSSAI Y has performed a service request procedure for network slice Y in, for example, XSA 706 and this trigger criteria may cause the AMF to cause transmission of a list of allowed NSSAI (e.g., blocking/removing S-NSSAI Y) to the UE for XSA 706. The AMF may block S-NSSAI from the list of allowed NSSAI based on a determination that the UE's location (e.g., cell identifier, RAN node identifier, GPS location, etc.) is outside of a respective SA for the respective S-NSSAI.

A private network may be deployed that is associated with an SA. For example, one or more RAN nodes, cells, and/or the AMF serving YSA 704, network slice Y being deployed as an SNPN, may be shared between a PLMN and an SNPN within YSA 704. The AMF may be shared between the PLMN and the SNPN and one or more other Network Functions (NFs) may not be shared between the PLMN and the SNPN. One or more other NF associated with the SNPN may not be shared with the PLMN. For example, with reference to FIG. 5 for illustrative purpose, the Common Network Functions 503 may comprise AMF 108 and represent the shared resources between the PLMN and the SNPN, and the First Network Slice 501 may represent the PLMN while the Second Network Slice 502 may represent the SNPN, each with their respective non-shared resources (e.g., NFs, etc.). As a UE enters and exits the SA (e.g., YSA 704) associated with the SNPN (e.g., configured with services associated with network slice Y described above), the UE starts and stops operating in the SNPN access mode. While in an SA (e.g., YSA 704) the UE can still be registered to the PLMN and receive PLMN services through a Non-3GPP InterWorking Function (N3IWF) of the PLMN using Internet Protocol (IP) connectivity that may be obtained via the SNPN (e.g., facilitating access to PLMN services via the SNPN).

The private network described above may be deployed as a PNI-NPN that is associated with the SA. One or more cells in the SA (e.g., YSA 704) may be shared between the PLMN and the PNI-NPN. For example, the PNI-NPN may be accessed by one or more of a non-CAG UE or a CAG UE. A UE may be configured with an allowed CAG list comprising a CAG-ID broadcast/transmitted via one or more cells (e.g., CAG-ID nn) in the SA. A UE that accesses a cell as a CAG cell may be provided with a particular S-NSSAI (e.g., S-NSSAI X 810, etc.) that is allowed for the SA (e.g., XSA 706, etc.). The UE may use a PDU session, via the CAG cell, associated with the particular S-NSSAI based on the allowed NSSAI for the SA. A UE not configured with the CAG cell will not be allowed to use the services of the PNI-NPN.

In some embodiments, a RAN node (e.g., see Base Station 802a as described above with respect to FIG. 8, etc.), or a cell thereof, may be configured to associate one or more TACs with a respective network (e.g., PLMN, SNPN, etc.). The RAN node or the cell may be shared by a plurality of networks. A cell may broadcast (e.g., cause transmission via a beam to a UE or another network entity) one or more TACs associated with a respective network. The RAN node or the cell, that supports the respective network(s), may be configured to provide the one or more TACs to one or more UEs via an Information Element (IE) of a System Information Block (SIB) during an SIB broadcast. A first TAC may be configured into a first IE of the SIB, the first TAC may be considered as a primary TAC. Moreover, one or more second TACs may be configured into one or more second IEs of the SIB, the one or more second TACs may be considered as secondary TACs. The one or more second TACs may be prioritized within the SIB (e.g., by the network entity that generated the SIB, for example an AMF, an SMF, or other network functions described above), the prioritization order of the one or more second TACs may be reflected in their encoding order associated with the SIB and/or the one or more second IEs. For example, a UE may determine that a second TAC is preferred/prioritized (e.g., by a network operator) over a third TAC of the one or more second TACs based on a determination that the second TAC is read before the third TAC. The secondary TAC(s) may be a proper subset of the primary TAC area.

A UE may select a TAC from a plurality of TACs comprising a first/primary TAC and one or more second/secondary TACs based on one or more selection criteria. A UE may select a TAC associated with the first IE of the SIB based on the UE's ability to read the one or more second IEs of the SIB. For example, a UE may be unable to read the one or more second IEs of the SIB and the UE may select the TAC of the first IE of the SIB. The addition of the secondary TAC(s) in an SIB may not require locking and/or unlocking of a respective cell so that the UEs that are unable to read the one or more secondary TACs, or second IE, may stay in a respective cell. The UE may select a TAC based on a list of TAIs, the list of TAIs may comprise one or more of a forbidden TAI or an allowable TAI. The list of TAIs may be a whitelist, a blacklist, or a combination thereof that indicates to a UE which TACs and/or network slices the UE may, or may not, use within a particular area. For example, a UE may receive a plurality of TACs and a list of forbidden TAIs from a cell, then the UE may determine that only one TAC of the plurality of TACs is not associated with the list of forbidden TAIs, the UE may then select that one TAC.

A UE may select a TAC from a plurality of TACs based on a priority reflected in the encoding order of the TACs within an associated SIB. For example, a primary TAC may be selected over one or more secondary TACs based on a determination by the UE that the primary TAC is read from the SIB prior to the one or more secondary TACs. The one or more secondary TACs may be listed according to descending priority. For example, a first secondary TAC may be selected over a fourth secondary TAC because the first secondary TAC is read prior to the fourth secondary TAC by the UE. The UE may select the first TAC read from the SIB (e.g., the primary TAC, or a secondary TAC) that is not indicated as forbidden to the UE by the list of TAIs (e.g., a list of forbidden TAIs). For example, the fourth secondary TAC read from the SIB by the UE may be selected by the UE because the primary TAC and the first, second, and third secondary TACs were all determined to be forbidden. A non-forbidden secondary TAC with the highest priority may be selected by the UE. The UE may determine which TAC is a primary TAC and which TAC is a secondary TAC based on the encoding location (e.g., first IE, second IE, etc.) and/or order (e.g., first TAC of the first IE, fifth TAC of the second IE, etc.) within the SIB. If all of the TACs of the plurality of TACs received from the cell by the UE are determined to be forbidden TACs, the UE may consider the current serving cell to be an unsuitable cell and the UE may initiate procedures to communicate with a different cell.

Each respective TAC of the plurality of TACs may be configured (e.g., by a network, AMF, etc.) to be associated with (e.g., mapped to) one or more respective S-NSSAIs or one or more respective network slice groups. For example, a UE within YSA 704 may receive a TAC, from the serving cell (e.g., Cell 804b as described above with respect to FIG. 8), that is mapped to S-NSSAI Y (e.g., as described above with respect to FIG. 7, and/or S-NSSAI 808 as described above with respect to FIG. 8). The UE may select the TAC that is mapped to S-NSSAI Y (if the UE wants to exploit S-NSSAI Y) and cause transmission of an indication of the selected TAC to a respective RAN node to establish a connection to, and/or receive services from, network slice Y. The plurality of TACs may be configured with a TAC mapped to S-NSSAI Y and/or a TAC mapped to S-NSSAI X (e.g., as described above with respect to FIG. 7, and/or S-NSSAI 810 as described above with respect to FIG. 8). The plurality of TACs may be configured with one or more TACs mapped to one or more respective S-NSSAI. For a PLMN, the S-NSSAI(s) or network slice group(s) supported by each of the TACs can be configured in the UE or broadcast by a cell.

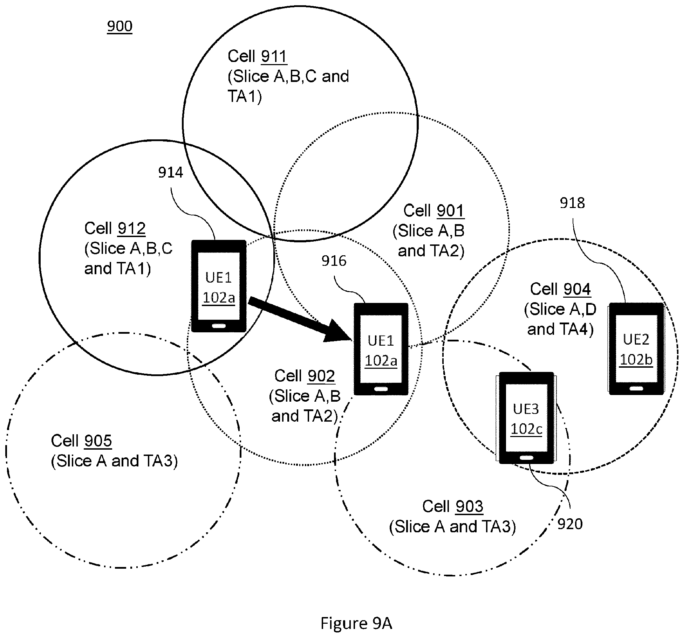

FIG. 9A is a block diagram illustrating example deployment area 900 associated with a communications network (e.g., communications network 100 and/or 500 as described above), in accordance with some example embodiments. The deployment area 900 comprises Cell 901, Cell 902, Cell 903, Cell 904, Cell 905, Cell 911, and Cell 912. Each respective cell is configured to serve one or more network slices (e.g., Cell 904 serves network slice A and network slice D). Each respective cell is configured to serve one or more TAs (e.g., Cell 904 serves TA4). A RAN node of RAN 104 may be configured with one or more cells (e.g., a first gNB may be configured with Cell 911 and Cell 912 and a second gNB may be configured with Cell 903 and Cell 905). Located within the deployment area 900 are UE1 102a, UE2 102b, and UE3 102c. UE1 102a, UE2 102b, and UE3 102c may be configured according to one or more configurations described above with respect to UE 102 and at least FIGs. 1-4. The UE1 102a is shown moving along an example path from position 914 to position 916 within at least the SA associated with Cell 902. The UE2 102b is located at position 918 within at least the SA associated with Cell 904. The UE3 102c is located at position 920 within at least a SA associated with one or more of Cell 903 and Cell 904.

The RAN nodes (e.g., gNBs) within deployment area 900 that serve the plurality of cells (e.g., Cell 901, 902, 903, 904, 905, 911, 912) may be configured to broadcast one or more additional TACs upon determining that one or more additional network slices need to be supported by one or more cells of the plurality of cells. The one or more additional TACs may be configured as secondary TACs within a second IE of an SIB, as described above. Each of the respective one or more additional TACs can be associated with one or more S-NSSAI supported within the tracking area and/or registration area. The UEs unable to read the secondary TACs may observe the area from the point of view of a primary TAC.

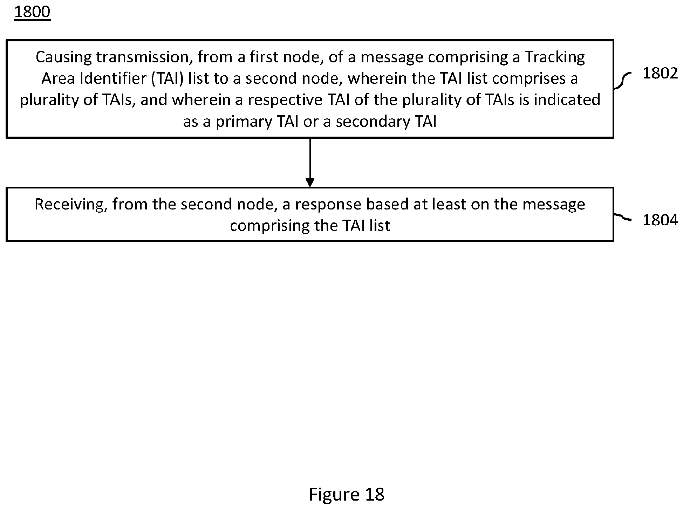

In some embodiments, a RAN node serving a cell which supports multiple TACs for a network may indicate, to a different RAN node, the multiple TACs and additionally, whether a respective TAC of the multiple TACs is a primary TAC or a secondary TAC. In this regard, as shown in method 1800 of FIG. 18, at operation 1802, the apparatus (e.g., when embodied by a RAN node) includes means, such as the processor 202, the memory 204, the communication interface 206 and/or the like, for causing transmission, from a first node, of a message comprising a Tracking Area Identifier (TAI) list to a second node, wherein the TAI list comprises a plurality of TAIs, and wherein a respective TAI of the plurality of TAIs is indicated as a primary TAI or a secondary TAI. In some embodiments, at operation 1804, the apparatus further includes means, such as the processor 202, the memory 204, the communication interface 206 and/or the like, for receiving, from the second node, a response based at least on the message comprising the TAI list.

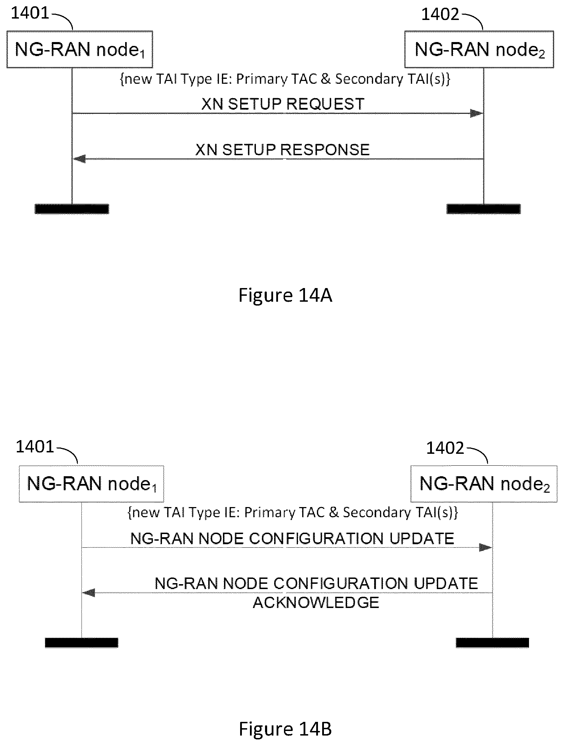

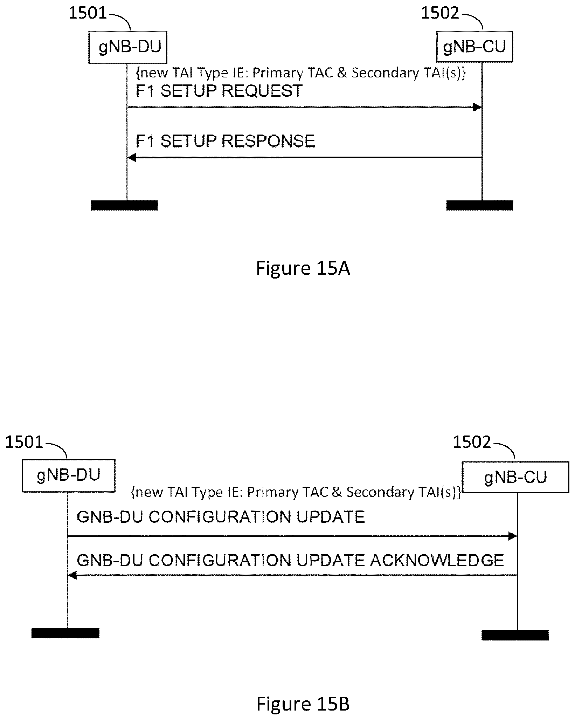

For example, in some embodiments, as shown in FIG. 14A and 14B, a first RAN node 1401 may indicate the multiple TACs along with an indication of the primary and secondary TACs, via an Xn interface as part of a Xn setup request or a configuration update to a second RAN node 1402. As shown, the Xn setup request or the configuration update may cause a response to be generated by the second RAN node, such as an Xn setup response or a configuration update acknowledgement. As another example, in some embodiments, as shown in FIG. 15A and 15B, a first RAN node 1501 may indicate the multiple TACs along with an indication of the primary and secondary TACs, via an F1 interface as part of a F1 setup request or a configuration update to a second RAN node 1502. As shown, the F1 setup request or the configuration update may cause a response to be generated by the next-generation Node B central unit (gNB-CU), such as an F1 setup response or a configuration update acknowledgement.

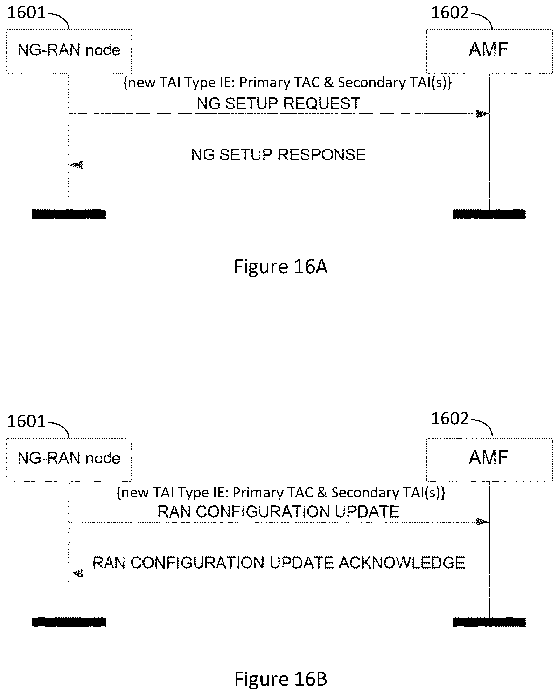

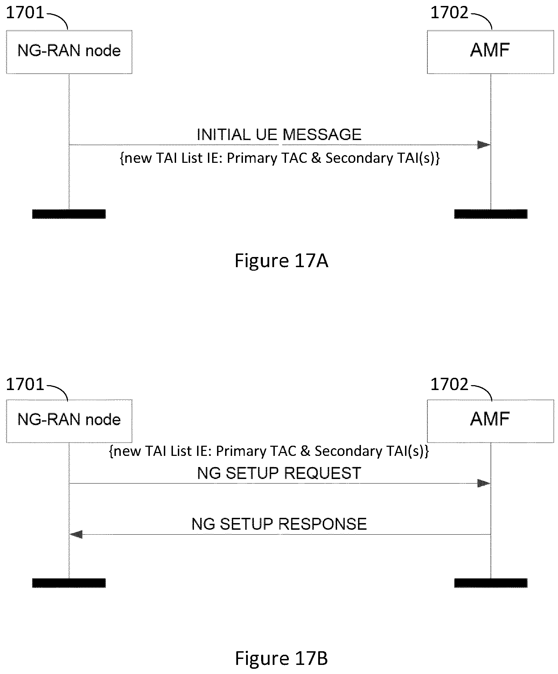

In some embodiments, the information on the TA may be in the form of a TAI. In some embodiments, the information on the TA may include semantics such that the primary or one or more secondary TACs may imply a wide-area slice or a limited area slice, e.g., a limited or confined service area slice. A limited area slice can be a dynamic slice, which may be deployed for a certain time. That is, the dynamic slice may be a temporary slice. In some embodiments, a RAN node may comprise a centralized unit (CU), such as a gNB-CU, or distributed unit (DU), such as a gNB-DU, (e.g., as shown in FIG. 15A), or an NG-RAN node (e.g., as shown in FIG. 14A) such as a base station or part of a base station, e.g., a network function (NF) of a base station. In some embodiments, as shown in FIGs. 16A-B and 17A-B, in instances where there is no Xn interface or the like, the information regarding the multiple TACs provided by a RAN node 1601, 1701 may be relayed via a core network node, such as via an AMF 1602, 1702. The relaying of the information can be in the form of configuration transfer procedures. In some embodiments, the information transfer may be in the form of an NG setup message via an NG interface and a corresponding NG setup response (e.g., as shown in FIG. 16A), a RAN configuration update and a corresponding RAN configuration update acknowledgement (e.g., as shown in FIG. 16B), an initial UE message (as shown in FIG. 17A), or an NG setup request and a corresponding NG setup response (e.g., as shown in FIG. 17B).

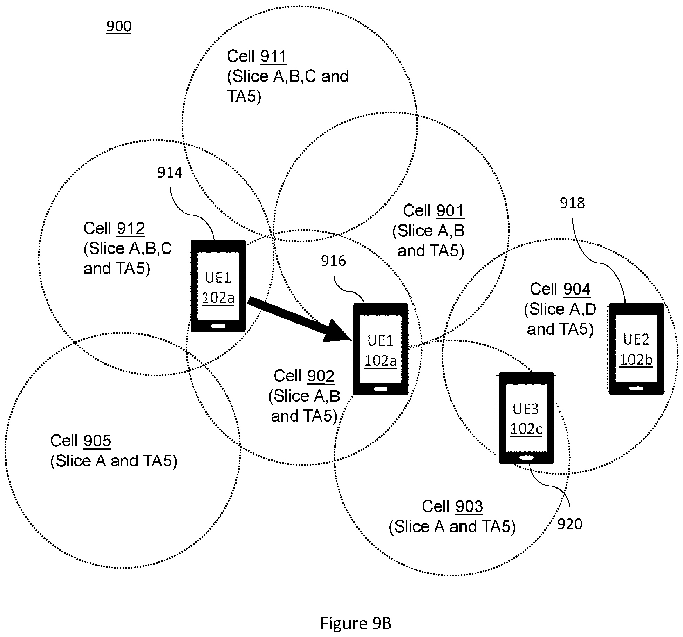

FIG. 9B is a block diagram illustrating the deployment area 900 as observed by one or more UEs unable to read the secondary TACs. A non-enabled UE (i.e., a UE unable to read the secondary TACs) may observe the deployment area 900 from the point of view of only a primary TAC (e.g., all of the cells may appear to belong to a single TA). For example, the non-enabled UE may determine that the plurality of cells (e.g., Cell 901, 902, 903, 904, 905, 911, 912) are all associated with a single TA, such as TA5 as shown in FIG. 9B. The UE unable to read the secondary TACs may not distinguish between TAs, for example, TA1 of Cell 911 and Cell 912 and TA2 of Cell 901 and 902 may be determined by the UE as all part of TA5. While the UE unable to read the secondary TACs may not distinguish between TAs, the network (e.g., AMF 108, RAN 104, etc.) and/or any UEs able to read the secondary TACs may observe (e.g., detect, determine, etc.) one or more of TA1, TA2, TA3, and TA4 associated with their respective cell(s) of the plurality of cells.

An enabled UE (i.e., a UE enabled to read the secondary TACs) may be configured to report all of the observed TAIs. For example, an enabled UE1 102a can report TA1 and TA5 and the enabled UE may further report a respective TA as primary (e.g., TA5) and secondary (e.g., TA1). As the TA1 and TA5 belong to the same cell (e.g., Cell 911 and/or Cell 912) from the RAN perspective, the UE1 102a may obtain the allowed NSSAI associated with network slices A, B, and C with RA configured to equal TA1. For example, the UE1 102a may cause transmission of a message indicating TA1 as primary and TA5 as secondary to AMF 108 via Cell 912 (e.g., while at position 914) and in response the UE1 102a may receive the allowed NSSAI associated with network slices A, B, and C from the AMF 108 via Cell 912. The UE may report only one of the observed TAs (e.g., primary TA5). The AMF 108 may be preconfigured with the information on the primary and secondary TAs (e.g., for deployment area 900) and, based on the preconfigured information on the primary and secondary TAs, the AMF 108 may assign one or more secondary TAs as part of the RA of the UE (e.g., UE1 102a). For example, if UE1 102a registers via TA5 and UE1 102a is determined to be an enabled UE, UE1 102a may be assigned/provided RA = TA1 by the network without rejecting the initial registration request.

Upon determination that an additional TAC, different from the TAC reported by the UE was assigned by the network, the enabled UE (e.g., UE1 102a) may initiate a registration area update procedure. For example, UE1 102a may receive a secondary TAC associated with Cell 904 and TA4, after reporting TA5 to the network, the network may have determined that UE1 102a is an enabled UE and that UE1 102a is located in the SA of Cell 904 (e.g., via a cell identifier, etc.). The network (e.g., AMF 108) can page one or more UEs within the SA of Cell 904, such as when there is a subscription change, and the one or more UEs may access the updated/changed network slice associated with the subscription change configured in Cell 904. The UE may perform cell selection and/or cell reselection based on all S-NSSAIs or network slice groups supported by all TACs of a respective cell in the selected network.

A RAN node (e.g., Next Generation (NG)-RAN node, gNB, etc.) may broadcast/transmit one or more additional TAIs (e.g., secondary TAIs) via a second IE different from a first IE comprising the primary TAI configured in an SIB. An AMF may be configured to obtain/retrieve information (e.g., from a repository configured via memory) associated with the network slice supported by the primary TAI and secondary TAIs via NGAP procedures. The AMF may be configured to assign the registration area based on the primary TAC and secondary TACs. The AMF may be configured to determine (e.g., based on transmission form the UE or information stored in a network repository associated with a UE ID) whether the UE is an enabled UE (i.e., a UE enabled/configured to read the second IEs and determine secondary TACs/TAIs) or a non-enabled UE (i.e., a UE not enabled/configured to read the second IEs and determine secondary TACs/TAIs). The AMF, via a RAN node, may cause transmission of a paging message to one or more UEs indicating one or more of a primary TAC/TAI, a secondary TAC/TAI, the NGAP procedures, or a respective registration area.

A UE, upon a detection/determination that multiple TACs are available for a selected network (e.g., PLMN or the like), may select a TAC during cell selection and reselection according to one or more TAC prioritization criteria described above. For example, UE1 102a when located at position 916 may be able to select services from network slice A via one or more of Cell 901, Cell 902, and Cell 903. At position 916 UE1 102a is at least partially covered by Cell 901 and Cell 902 associated with TA2 and by Cell 903 associated with TA3. UE1 102a may select between to TA2 and TA3 based on a network operator configured prioritization reflected via an SIB. The UE may report the observed TACs (e.g., to the network, AMF, etc.) in case of registration and registration area update procedures. The UE may perform registration procedures upon detection/determination of an additional secondary TAC (e.g., read in the SIB). It should be appreciated that, in some embodiments, by at least providing enabled UEs with the secondary TACs instead of assigning an additional TAC to one or more cells in an area to support an additional network slice, all UEs in the area that have no relationship to the additional network slice are not required to perform an additional registration update.

One or more private networks may be deployed in association with an SA (e.g., YSA 704, XSA 706, or any other SA described herein). For example, access to a network slice, and/or services provided by the network slice, may be restricted within an SA by deploying the network slice as a private network within the SA. For example, network slice Y (e.g., associated with S-NSSAI Y) may be configured as a private network (e.g., PNI-NPN, SNPN, etc.) within YSA 704. The RAN node, and/or cell thereof, associated with YSA 704 may be configured to broadcast (e.g., cause transmission to a UE within YSA 704) a Closed Access Group (CAG)-Identifier (ID). The CAG-ID may be received by a UE and may be used to determine the identity of the private network (e.g., PNI-NPN, SNPN, etc.) within YSA 704. For example, a UE within YSA 704 may receive a CAG-ID associated with network slice Y, that is deployed as a PNI-NPN, and the UE determines to use the resources of the cell and/or the services of network slice Y via a CAG identified by the CAG-ID. The UE may determine whether a PDU session associated with S-NSSAI Y may be used based on the CAG-ID associated with the PDU session.

A network slice may be deployed as an PNI-NPN in a portion of deployment area 900 (e.g., within Cell 905 and Cell 903). The cells in the portion of deployment area 900 covered by the PNI-NPN may be configured to broadcast a CAG-ID (e.g., CAG-ID nn) associated with the PNI-NPN. One or more UEs that use (e.g., access, request, etc.) services offered by the PNI-NPN may be configured with an DNN-allowed CAG list including the CAG-ID. A UE Route Selection Policy (URSP) sent by a PCF (e.g., PCF 114) may include an allowed CAG ID list associated with one or more DNN and/or S-NSSAI. The UE may consider the allowed CAG ID list prior to initiating a PDU session request. The SMF (e.g., SMF 110) may accept or reject one or more PDU sessions for a respective DNN and/or S-NSSAI based on a DNN-allowed CAG ID list. The allowed CAG list associated with respective DNN and/or S-NSSAI may be a subset of an allowed configurations list given to a UE for mobility management procedures.

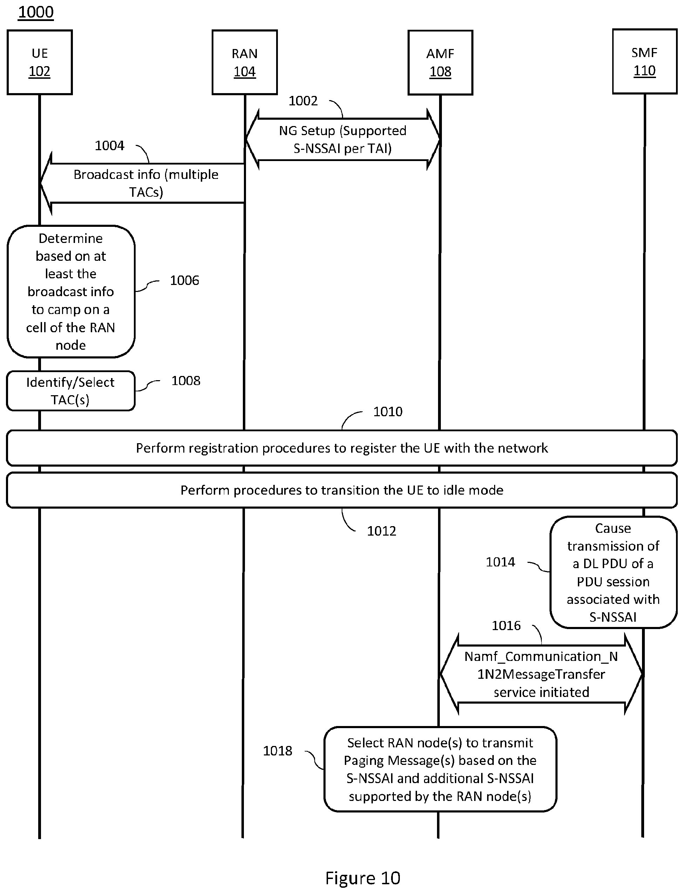

FIG. 10 is a signaling diagram illustrating an example signal sequence 1000, for supporting non-uniform network slice deployment over a deployment area (e.g., deployment area 700, 900, 800 as described above), between communication devices (e.g., UE 102, gNBs, apparatus 200, etc.) by way of at least a network infrastructure (e.g., communications network 100, 500, etc.). As shown, the example network infrastructure utilized for signal sequence 1000 comprises at least UE 102, RAN 104, AMF 108, and SMF 110. The network infrastructure utilized for signal sequence 1000 may comprise one or more other network entities described above with respect to FIGs. 1-9, such as UPF 106, UDM 118, UE1 102a, Base Station 802b, First Network Slice 501, and/or the like as described herein.

The RAN 104 may be configured with one or more base stations (e.g., Base Station 802b, etc.) and one or more cells (e.g., Cell 804b, Cell 902, etc.) for performing the operations described below with respect to FIG. 10. The one or more base stations may be configured to communicate with one or more other base stations (e.g., via an Xn interface, etc.). The network infrastructure may be configured in accordance with 5G system standards, or the like (e.g., 4G, LTE, etc.), and the serving RAN (e.g., RAN 104 or the like) can comprise one or more 5G radio nodes, such as one or more gNBs or equivalent. The signal sequence 1000 may be implemented utilizing one or more network infrastructures associated with one or more networks (e.g., PLMN, PNI-NPN, SNPN, etc.) and each respective network of the one or more networks may comprise one or more network slices (e.g., network slice Y as described above). The one or more network slices may be associated with one or more SAs of an RA of a deployment area (e.g., deployment area 700, 900, 800 as described above).

Signal sequence 1000 begins at block 1002 with AMF 108 and RAN 104 being configured, via a Next Generation (NG) Setup, to support mapping of S-NSSAI to respective TAI. For example, the AMF 108 may be configured to obtain/retrieve information via at least a repository configured via memory (e.g., memory 204) accessible to the network to associate respective network slices with one or more of a primary TAI and/or a secondary TAI via NGAP procedures. A RAN node of RAN 104 may be configured, such as by the AMF 108, to receive and/or transmit a plurality of TAIs between at least the AMF 108 and the UE 102. A respective S-NSSAI mapped to a respective network slice and TAI/TAC may be configured according to S-NSSAI format 600 as described above. Upon detection of the UE 102 (e.g., requesting service), the RAN 104 causes transmission of a plurality of TACs associated with the primary TAI and the one or more secondary TAIs configured during the NG Setup, see block 1004. The RAN 104 may broadcast the plurality of TACs via one or more RAN nodes and one or more cells. The broadcast information comprising multiple TACs may be formatting according to an SIB configured with at least a first IE and a second IE as described above.

At block 1006, the UE 102 determines to camp on a cell of the RAN node (e.g., the RAN node that broadcast/transmitted the plurality of TACs to the UE 102. The UE 102 may determine to camp on the cell based on at least the broadcast information received by the UE 102 at block 1004. The UE 102 may identify and/or select, based on the received plurality of TACs, one or more TACs for performing registration procedures, see block 1008. For example, the UE 102, based on its current position within a registration area and/or available cells, may identify and then select a primary TAC and a secondary TAC to transmit back to the network (e.g., AMF 108, SMF 110) to establish, for example a PDU session.

At block 1010, one or more of the UE 102, the RAN 104, the AMF 108, and the SMF 110 perform registration procedures to register the UE 102 with the network and/or network slice associated with at least one of the selected TACs. At block 1012, one or more of the UE 102, the RAN 104, the AMF 108, and the SMF 110 perform procedures to transition the UE 102 to idle mode. While in the idle mode (e.g., idle mode mobility state), the UE may request establishment, and/or reestablishment, of a PDU session for a network slice associated with the selected TAC and/or an S-NSSAI mapped to the selected TAC.

At block 1014, the SMF 110 is configured to cause transmission of a Downlink (DL) PDU associated with a PDU session associated with the S-NSSAI identified to the network by the UE 102 via at least one of the selected TACs. The SMF 110 causes initiation of the Namf_Communication_N1N2MessageTransfer service with at least the AMF 108, see block 1016. At block 1018, the AMF 108 selects one or more RAN nodes to transmit one or more paging messages. The selection of the one or more RAN nodes may be based on the S-NSSAI and additional S-NSSAI supported (or not supported) by the one or more RAN nodes and one or more additional RAN nodes associated with the RAN 104 and/or the RA. The AMF 108 may further cause transmission of the paging messages to the selected RAN nodes and may identify the target UE (e.g., UE 102) for receipt of the paging messages. Upon receipt of the paging messages the RAN 104 may cause transmission, via the selected RAN nodes, of the paging message to the one or more target UEs (e.g., UE 102).

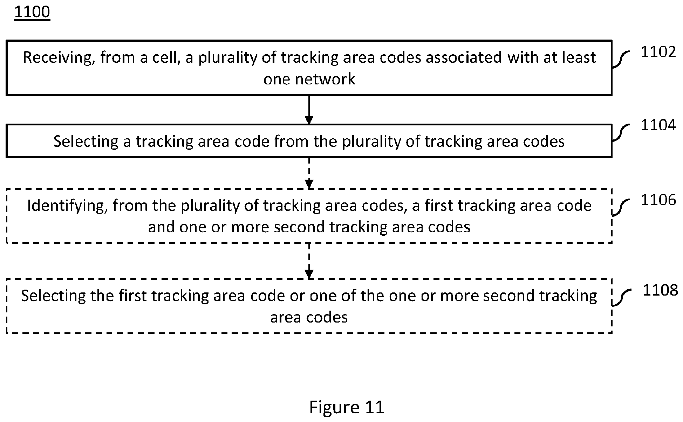

The operations/procedures described above with respect to FIG. 10 can be performed in response to one or more preceding operations/procedures, for example, UE 102 may automatically perform the identification and/or selection of block 1008 based on completion of the determination at block 1006. One or more additional operations/procedures (not shown) may be performed during signal sequence 1000, for example, after the operations/procedures of block 1008 the UE 102 may cause transmission of the selected TACs to the AMF 108 via the RAN 104 to initiate the operations/procedures of block 1010. In some embodiments, transmission of the selected TACs may be performed, for example, as part of registration procedures. in some embodiments, in instances in which the RAN 104 forwards a selected TAC to the AMF 108, the RAN 104 can additionally indicate the primary tracking area code and the secondary tracking area code(s). As described above, the information regarding the TA could be in the form of TAI. In some embodiments, the information regarding the TA may comprise semantics that the primary and/or one or more secondary TACs may imply a wide-area slice or limited area slice, e.g., a limited or confined service area slice. A limited area slice can be a dynamic slice, which may be deployed for a certain time. That is, the dynamic slice may be a temporary slice. Signal sequence 1000 may comprise one or more additional operations/procedures (not shown) as described above with respect to FIGs. 1-9, as described below with respect to FIGs. 11-13, and/or any other configurations, operations, and/or procedures described herein.

In some embodiments, such as in instances in which a UE comprises a capability of reading multiple TACs, NGAP User Location Information contained in an NGAP Initial UE Message (e.g., as shown in FIG. 17A) comprises multiple TAIs broadcasted by the NG-RAN cell in which the UE has established a connection. In this regard, in some embodiments, the IE may indicate the primary TAI and at least one secondary TAI (e.g., through a marking or flagging of the primary TAI and/or at least one secondary TAI). In some embodiments, the IE may indicate (e.g., through a marking or flagging) at least one secondary TAI for limited service area slice(s).

In some embodiments, such as instances in which a UE does not include a capability to read multiple TACs, NGAP User Location Information contained in an NGAP Initial UE Message contains a single TAI broadcasted by the NG-RAN cell in which the UE has established a connection. It is to be appreciated that throughout this disclosure, the term TAC may also refer to a TAI, e.g., if there is a selected network. In this regard, a TAC in combination with a network identifier may form a TAI.

Although the user location information may be provided in various manners, one example of an initial UE message that includes user location information is provided below:

| **IE/Group Name** | | | **Presence** | **Range** | **IE type** | **Semantics description** | **Criticality** | **Assigned Criticality** |
|---|---|---|---|---|---|---|---|---|
| CHOICE *User Location Information* | | | M | | | | - | |
| | *>E-UTRA user location information* | | | | | | | |
| | | >>E-UTRA CGI | M | | | | - | |
| | | >>TAI List | M | | | | - | |
| | | >>Age of Location | O | | Time Stamp | Indicates the UTC time when the location information was generated. | - | |
| | | >>PSCell Information | O | | NG-RAN CGI | | YES | ignore |
| | *>NR user location information* | | | | | | | |
| | | >>NR CGI | M | | | | - | |
| | | >>TAI List | M | | | | - | |

wherein M indicates a mandatory IE and O indicates an optional IE in this example embodiment. Moreover, the initial UE message may include more or different fields and IEs than those in the above-depicted table, which is provided by way of example but not of limitation.

In regards to the TAI List, this IE indicates a list of TAIs broadcast, such as by the NG RAN node, that can be accessed by the UE. Although a TAI List may be structured in various manners, the TAI List of one example, e.g., as part of NR user location information, is structured as follows:

| **IE/Group Name** | **Presence** | **Range** | **IE type and reference** | **Semantics description** | **Criticality** | **Assigned Criticality** |
|---|---|---|---|---|---|---|
| **TAI Item** | | *1..<maxnoofsupportedTACs>* | | | - | |
| >TAC | M | | | Broadcast TAC | | |
| **>Broadcast PLMNs** | | *1..<maxnoofsupportedPLMNs* > | | | - | |
| >>PLMN Identity | M | | | Broadcast PLMN | - | |
| >>TAI Type | M | | ENUMERATE D (primary, secondary, ...) | Wide-area slice or limited area slice categorizatio n | - | |

In this example embodiment, the TAI Type IE may be included in the messages exchanged pursuant to FIGs. 14A - 16B. Moreover, a TAI List may include more or different fields and IEs than those in the above-depicted table, which is provided by way of example but not of limitation.

In another embodiment, NGAP setup (e.g., an NG setup request, as shown in FIGs. 16A and 17B) may comprise a TAI Slice Support List, which may be marked and/or flagged to indicate a primary TAI and one or more secondary TAIs. In some embodiments, an associated IE indicates the at least one secondary TAI for the limited service area slices (e.g., through a marking and/or flagging). In some embodiments, the response message (e.g., NG setup response as shown in FIG. 16A) may comprise a Slice Support List, which may be marked and/or flagged to indicate a primary slice and one or more secondary slices. In some embodiments, an associated IE indicates the at least one secondary slice for the limited service area slices (e.g., through a marking and/or flagging). In some embodiments, a configuration message from a core network entity to a RAN entity, e.g., AMF Configuration Update message, may comprise a Slice Support List, which may be marked and/or flagged to indicate a primary slice and one or more secondary slices. In some embodiments, an associated IE indicates the at least one secondary slice for the limited service area slices (e.g., through a marking and/or flagging).

In another embodiment, Xn-AP setup (e.g., an Xn setup request) as shown in FIG. 14A may comprise a TAI Slice Support List, which may be marked and/or flagged to indicate a primary TAI and one or more secondary TAIs. In some embodiments, an associated IE indicates the at least one secondary TAI for the limited service area slices (e.g., through a marking and/or flagging). In some embodiments, the response message (e.g., Xn setup response as shown in FIG. 14A) may also comprise a TAI Slice Support List, which may be marked and/or flagged to indicate a primary TAI and one or more secondary TAIs. In some embodiments, an associated IE indicates the at least one secondary TAI for the limited service area slices (e.g., through a marking and/or flagging).

In another embodiment, F1-AP setup (e.g., an F1 setup request) as shown in FIG. 15A may comprise a TAI Slice Support List, which may be marked and/or flagged to indicate a primary TAI and one or more secondary TAIs. In some embodiments, an associated IE indicates the at least one secondary TAI for the limited service area slices (e.g., through a marking and/or flagging). It is to be appreciated that throughout this disclosure, the information regarding a primary TAI and one or more secondary TAIs may be tabulated in different formats, e.g., in case of F1 setup request (as shown in FIG. 15A) and gNB-DU Configuration Update (as shown in FIG. 15B), the information may be embedded into the Served Cell Information IE. A combination of different formats is also possible.

In some embodiments, as the NG-RAN node supports slices from radio and protocol perspectives, the 5GC may provide the slices of overlapping TAIs as the allowed NSSAI to the UE. In some embodiments, the UE may include the primary TAI and at least one secondary TAI in a registration request message. Such message can include a field, e.g., [Attached TAIs: Primary and Secondary (if supported)], to indicate the needed information.

In some embodiments, there can be one or more primary TAIs and/or one or more secondary TAIs.

FIG. 11 is a flowchart of the operations of an example method 1100 performed by an example apparatus 200 which, in some embodiments, may be embodied by one or more computing devices (e.g., as described above with respect to FIG. 4), such as a user equipment (e.g., UE 102, a smart phone, laptop computer, etc.), which may, in turn, include a computer program product comprising a non-transitory computer-readable storage medium storing computer program code to be executed by at least processor 202. The user equipment may be in communication with at least a network and/or network slice, such as described above for communications network 100 and/or 500, via one or more of a cell, a beam, a base station, or the like.

As shown in block 1102, the apparatus 200 of this example embodiment includes means, such as the processor 202, the memory 204, the communication interface 206 and/or the like, for receiving, from a cell, a plurality of tracking area codes associated with at least one network. As shown in block 1104, apparatus 200 (e.g., UE 102, a smart phone, laptop or tablet computer, etc.) is further configured with means, such as the processor 202, the communication interface 206 or the like, for selecting a tracking area code from the plurality of tracking area codes associated with at least one network. In an example embodiment, different TAC(s) may be broadcast per network, such as per PLMN or SNPN, with a TAC then being selected from the TAC(s) for a respective network. In another embodiment in which PLMN X and PLMN Y may both broadcast TACs, the apparatus may be configured to choose between TAC A for PLMN X and TAC B for PLMN Y in an instance in which PLMNs X and Y are equivalent. The apparatus 200 (e.g., UE 102, a smart phone, laptop or tablet computer, etc.) may further be configured for identifying, from the plurality of tracking area codes, a first tracking area code and one or more second tracking area codes, see block 1106. At block 1108, based on the identified first tracking area code and the identified one or more second tracking area codes, the apparatus 200 may be further configured with means for selecting the first tracking area code, for example as a primary tracking area code and/or means for selecting one of the one or more second tracking area codes, for example as a secondary tracking area code for reporting to the AMF of a network or network slice associated with the tracking area codes.

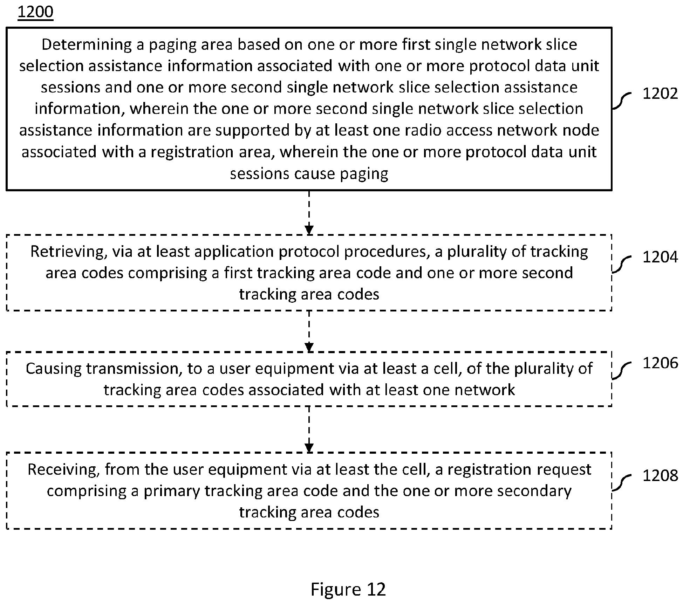

FIG. 12 is a flowchart of the operations of an example method 1200 performed by an example apparatus 200 which, in some embodiments, may be embodied by one or more computing devices (e.g., as described above with respect to FIG. 4), such as a network server hosting, at least partially, one or more network functions (e.g., AMF 108, etc.). The one or more computing devices may, in turn, include a computer program product comprising a non-transitory computer-readable storage medium storing computer program code to be executed by at least processor 202. The one or more computing devices may be in communication with at least a radio access network (e.g., RAN 104), such as described above for communications network 100 and/or 500, via one or more interfaces (e.g., N2 interface, or the like). The one or more computing devices may be in communication with at least one user equipment, such as UE 102 or the like, via one or more interfaces (e.g., N1 interface, N2 interface, or the like).

Method 1200 may start at block 1202 when the apparatus 200 (e.g., AMF server associated with AMF 108) of this example embodiment comprising means, such as the processor 202, the memory 204, the communication interface 206 and/or the like, for determining a paging area based on one or more first single network slice selection assistance information associated with one or more protocol data unit sessions and one or more second single network slice selection assistance information. The one or more second single network slice selection assistance information being supported by at least one radio access network node associated with a registration area, and the one or more protocol data unit sessions configured to cause the paging between the AMF 108 and the UE 102 via at least the RAN 104.

As shown in block 1204, apparatus 200 may be further configured with means, such as the processor 202, the communication interface 206 or the like, for retrieving, via at least application protocol procedures, a plurality of tracking area codes comprising a first tracking area code and one or more second tracking area codes. The apparatus 200 (e.g., server, etc.) may further be configured for causing transmission, to a user equipment via at least a cell, of the plurality of tracking area codes associated with at least one network, see block 1206. At block 1208, based on the identified first tracking area code and the identified one or more second tracking area codes, the apparatus 200 may be further configured with means for selecting the first tracking area code, for example as a primary tracking area code and/or means for receiving, from the user equipment via at least the cell, a registration request comprising a primary tracking area code and the one or more secondary tracking area codes.

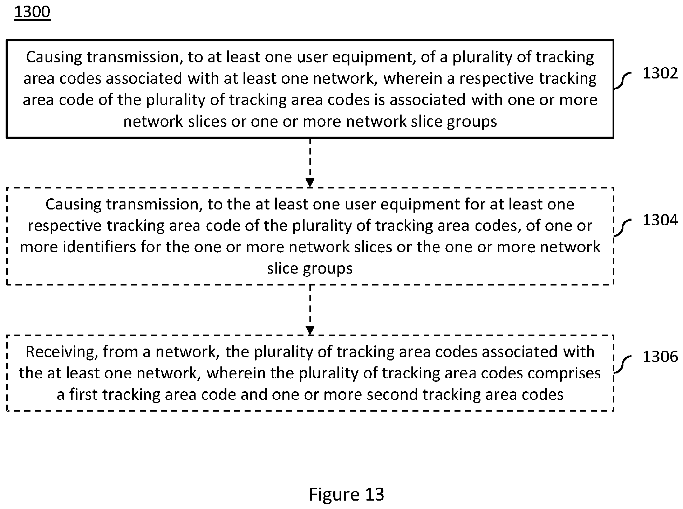

FIG. 13 is a flowchart of the operations of an example method 1300 performed by an example apparatus 200 which, in some embodiments, may be embodied by one or more computing devices (e.g., as described above with respect to FIG. 4), such as a radio access network (e.g., RAN 104, etc.) or portion thereof (e.g., a RAN node, gNB, Base Station 802b, Cell 902, and/or the like). The one or more computing devices may, in turn, include a computer program product comprising a non-transitory computer-readable storage medium storing computer program code to be executed by at least processor 202. The one or more computing devices may be in communication with at least a network and/or network slice, such as described above for communications network 100 and/or 500, via one or more interfaces (e.g., N2 interface, or the like). The one or more computing devices may be in communication with at least one user equipment, such as UE 102 or the like, via one or more interfaces (e.g., N2 interface, or the like).

As shown in block 1302, apparatus 200 of this example embodiment includes means, such as the processor 202, the memory 204, the communication interface 206 and/or the like, for causing transmission, to at least one user equipment, of a plurality of tracking area codes associated with at least one network, wherein a respective tracking area code of the plurality of tracking area codes is associated with one or more network slices or one or more network slice groups. As shown in block 1304, apparatus 200 (e.g., base station 502 serving cell 508A and at least beam 512 and/or 513, etc.) may be further configured with means, such as the processor 202, the communication interface 206 or the like, for causing transmission, to the at least one user equipment for at least one respective tracking area code of the plurality of tracking area codes, of one or more identifiers for the one or more network slices or the one or more network slice groups. As shown in block 1306, apparatus 200 (e.g., base station 502 serving cell 508A and at least beam 512 and/or 513, etc.) may be further configured with means for receiving, from a network, the plurality of tracking area codes associated with the at least one network, wherein the plurality of tracking area codes comprises a first tracking area code and one or more second tracking area codes.

As described above, the referenced flowcharts of methods that can be carried out by an apparatus according to related computer program products comprising computer program code. It will be understood that each block of the flowcharts, and combinations of blocks in the flowcharts, can be implemented by various means, such as hardware, firmware, processor, circuitry, and/or other devices associated with execution of software including one or more computer program instructions. For example, one or more of the procedures described above can be embodied by computer program instructions. In this regard, the computer program instructions which embody the procedures described above can be stored by a memory device, e.g., 204, of an apparatus, e.g., 200, employing an embodiment of the present invention and executed by processor, e.g., 202, of the apparatus.

As will be appreciated, any such computer program instructions can be loaded onto a computer or other programmable apparatus (e.g., hardware) to produce a machine, such that the resulting computer or other programmable apparatus implements the functions specified in the flowchart blocks. These computer program instructions can also be stored in a computer-readable memory that can direct a computer or other programmable apparatus to function in a particular manner, such that the instructions stored in the computer-readable memory produce an article of manufacture, the execution of which implements the function specified in the flowchart blocks. The computer program instructions can also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

A computer program product is therefore defined in those instances in which the computer program instructions, such as computer-readable program code portions, are stored by at least one non-transitory computer-readable storage medium with the computer program instructions, such as the computer-readable program code portions, being configured, upon execution, to perform the functions described above. In other embodiments, the computer program instructions, such as the computer-readable program code portions, need not be stored or otherwise embodied by a non-transitory computer-readable storage medium, but can, instead, be embodied by a transitory medium with the computer program instructions, such as the computer-readable program code portions, still being configured, upon execution, to perform the functions described above.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations, methods, steps, processes, or the like, above can be modified or further amplified. Furthermore, in some embodiments, additional optional operations, methods, steps, processes, or the like, can be included. Modifications, additions, subtractions, inversions, correlations, proportional relationships, disproportional relationships, attenuation and/or amplifications to the operations above can be performed in any order and in any combination. It will also be appreciated that in instances where particular operations, methods, processes, or the like, required particular hardware such hardware may be considered as part of apparatus 200 for any such embodiment.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions can be provided by alternative embodiments without departing from the scope of the appended claims. In this regard, for example, different combinations of elements and/or functions than those explicitly described above are also contemplated as can be set forth in some of the appended claims. Although specific terms are employed herein, they are used in a generic and descriptive sense only and not for purposes of limitation.

## Claims

1. A method of a user equipment, the method comprising:
receiving, from a cell, a system information block comprising a plurality of tracking area codes associated with at least one network, wherein a respective tracking area code of the plurality of tracking area codes is associated with one or more network slices or one or more network slice groups; and
selecting a tracking area code from the plurality of tracking area codes associated with the at least one network, wherein the selecting is based on a priority indicated by an encoding order of the plurality of tracking area codes in the system information block.

2. The method according to claim 1, further comprising:
identifying, from the plurality of tracking area codes, a first tracking area code and one or more second tracking area codes; and
selecting the first tracking area code or one of the one or more second tracking area codes.

3. The method according to any of claims 1 to 2, further comprising:
receiving, from the cell for at least one respective tracking area code of the plurality of tracking area codes, one or more identifiers for one or more network slices or one or more network slice groups;
receiving, from the cell, a tracking area identifiers list comprising one or more of a forbidden tracking area identifier or an allowable tracking area identifier; and
determining whether one or more of the plurality of tracking area codes is associated with the tracking area identifiers list.

4. The method according to any of claims 1 to 3, further comprising:
determining one or more allowable tracking area codes of the plurality of tracking area codes; and
selecting a respective allowable tracking area code based upon relative priorities of the one or more allowable tracking area codes.

5. The method according to any of claims 1 to 4, further comprising:
determining one or more forbidden tracking area codes of the plurality of tracking area codes; and
selecting a respective tracking area code based upon relative priorities of the plurality of tracking area codes that are not forbidden.

6. The method according to any of claims 1 to 5, wherein the first tracking area code of the plurality of tracking area codes is associated with a first information element of the system information block.

7. The method according to claim 6, wherein the one or more second tracking area codes of the plurality of tracking area codes are associated with a second information element of the system information block that is different than the first information element.

8. The method according to claims 6 or 7, wherein the first tracking area code is a primary tracking area code and the one or more second tracking area codes are secondary tracking area codes.

9. The method according to any of claims 1 to 8, wherein a respective tracking area code of the plurality of tracking area codes is mapped to respective single network slice selection assistance information.

10. The method according to any of claims 1 to 9, wherein the at least one network comprises one or more of a public land mobile network, a stand-alone non-public network or a public network integrated non-public network.

11. A method of an access node, the method comprising:
causing transmission, to at least one user equipment, of a system information block comprising a plurality of tracking area codes associated with at least one network, wherein a respective tracking area code of the plurality of tracking area codes is associated with one or more network slices or one or more network slice groups, and wherein an encoding order of the plurality of tracking area codes in the system information block indicates a priority of the plurality of tracking area codes.

12. The method according to claim 11, further comprising:
causing transmission, to the at least one user equipment for at least one respective tracking area code of the plurality of tracking area codes, of one or more identifiers for the one or more network slices or the one or more network slice groups.

13. An apparatus comprising means for performing the method of a user equipment according to any of claims 1 to 10, or the method of an access node according to any of claims 11 to 12.

14. A computer program product comprising a non-transitory computer readable storage medium having program code portions stored thereon, the program code portions configured, upon execution by a processor of a user equipment cause the user equipment to perform the method of any of claims 1 to 10, or upon execution by a processor of an access node cause the access node to perform the method of any of claims 11 to 12.

## Patentansprüche

1. Verfahren von einem Endgerät, wobei das Verfahren umfasst:
Empfangen, aus einer Zelle, eines Systeminformationsblocks, der eine Vielzahl von Verfolgungsgebietscodes (Tracking Area Codes, TAC) umfasst, die mindestens einem Netzwerk zugeordnet sind, wobei ein jeweiliger Verfolgungsgebietscode der Vielzahl von Verfolgungsgebietscodes einem oder mehreren Netzwerk-Slices oder einer oder mehreren Netzwerk-Slice-Gruppen zugeordnet ist; und
Auswählen eines Verfolgungsgebietscodes aus der Vielzahl von Verfolgungsgebietscodes, die dem mindestens einen Netzwerk zugeordnet sind, wobei das Auswählen auf einer Priorität basiert, die durch eine Codierungsreihenfolge der Vielzahl von Verfolgungsgebietscodes in dem Systeminformationsblock angegeben wird.

2. Verfahren nach Anspruch 1, das ferner umfasst:
Identifizieren, aus der Vielzahl von Verfolgungsgebietscodes, eines ersten Verfolgungsgebietscodes und eines oder mehrerer zweiter Verfolgungsgebietscodes; und
Auswählen des ersten Verfolgungsgebietscodes oder eines von dem einen oder den mehreren zweiten Verfolgungsgebietscodes.

3. Verfahren nach einem der Ansprüche 1 bis 2, das ferner umfasst:
Empfangen, aus der Zelle für mindestens einen jeweiligen Verfolgungsgebietscode der Vielzahl von Verfolgungsgebietscodes, einer oder mehrerer Kennungen für einen oder mehrere Netzwerk-Slices oder eine oder mehrere Netzwerk-Slice-Gruppen;
Empfangen, aus der Zelle, einer Liste von Verfolgungsgebietskennungen, die eine oder mehrere von einer verbotenen Verfolgungsgebietskennung oder einer zulässigen Verfolgungsgebietskennung umfasst; und
Bestimmen, ob einer oder mehrere der Vielzahl von Verfolgungsgebietscodes der Liste von Verfolgungsgebietskennungen zugeordnet sind.

4. Verfahren nach einem der Ansprüche 1 bis 3, das ferner umfasst:
Bestimmen eines oder mehrerer zulässiger Verfolgungsgebietscodes aus der Vielzahl von Verfolgungsgebietscodes; und
Auswählen eines jeweiligen zulässigen Verfolgungsgebietscodes basierend auf relativen Prioritäten des einen oder der mehreren zulässigen Verfolgungsgebietscodes.

5. Verfahren nach einem der Ansprüche 1 bis 4, das ferner umfasst:
Bestimmen eines oder mehrerer verbotener Verfolgungsgebietscodes aus der Vielzahl von Verfolgungsgebietscodes; und
Auswählen eines jeweiligen Verfolgungsgebietscodes basierend auf relativen Prioritäten der Vielzahl von Verfolgungsgebietscodes, die nicht verboten sind.

6. Verfahren nach einem der Ansprüche 1 bis 5, wobei der erste Verfolgungsgebietscode der Vielzahl von Verfolgungsgebietscodes einem ersten Informationselement des Systeminformationsblocks zugeordnet ist.

7. Verfahren nach Anspruch 6, wobei der eine oder die mehreren zweiten Verfolgungsgebietscodes der Vielzahl von Verfolgungsgebietscodes einem zweiten Informationselement des Systeminformationsblocks zugeordnet sind, das sich von dem ersten Informationselement unterscheidet.

8. Verfahren nach Anspruch 6 oder 7, wobei der erste Verfolgungsgebietscode ein primärer Verfolgungsgebietscode ist und der eine oder die mehreren zweiten Verfolgungsgebietscodes sekundäre Verfolgungsgebietscodes sind.

9. Verfahren nach einem der Ansprüche 1 bis 8, wobei ein jeweiliger Verfolgungsgebietscode der Vielzahl von Verfolgungsgebietscodes auf eine jeweilige Unterstützungsinformation für die Auswahl eines einzelnen Netzwerk-Slice (Network Slice Selection Assistance Information, NSSAI) abgebildet wird.

10. Verfahren nach einem der Ansprüche 1 bis 9, wobei das mindestens eine Netzwerk eines oder mehrere der folgenden Netzwerke umfasst: ein öffentliches landgestütztes Mobilfunknetz, ein eigenständiges nicht-öffentliches Netzwerk oder ein in ein öffentliches Netzwerk integriertes nicht-öffentliches Netzwerk.

11. Verfahren eines Zugangsknotens, wobei das Verfahren umfasst:
Veranlassen der Übertragung, an mindestens ein Endgerät, eines Systeminformationsblocks, der eine Vielzahl von Verfolgungsbereichscodes umfasst, die mindestens einem Netzwerk zugeordnet sind, wobei ein jeweiliger Verfolgungsbereichscode der Vielzahl von Verfolgungsbereichscodes einem oder mehreren Netzwerk-Slices oder einer oder mehreren Netzwerk-Slice-Gruppen zugeordnet ist, und wobei eine Codierungsreihenfolge der Vielzahl von Verfolgungsbereichscodes in dem Systeminformationsblock eine Priorität der Vielzahl von Verfolgungsbereichscodes angibt.

12. Verfahren nach Anspruch 11, das ferner umfasst:
Veranlassen der Übertragung, an mindestens ein Endgerät für mindestens einen jeweiligen Verfolgungsgebietscode der Vielzahl von Verfolgungsgebietscodes, einer oder mehrerer Kennungen für den einen oder die mehreren Netzwerk-Slices oder die eine oder die mehreren Netzwerk-Slice-Gruppen.

13. Vorrichtung umfassend Mittel zum Durchführen des Verfahrens eines Endgeräts nach einem der Ansprüche 1 bis 10, oder des Verfahrens eines Zugangsknotens nach einem der Ansprüche 11 bis 12.

14. Computerprogrammprodukt, das ein nicht-transitorisches computerlesbares Speichermedium mit darauf gespeicherten Programmcodeabschnitten umfasst, wobei die Programmcodeabschnitte so konfiguriert sind, dass sie bei Ausführung durch einen Prozessor eines Endgeräts das Endgerät veranlassen, das Verfahren nach einem der Ansprüche 1 bis 10 durchzuführen, oder bei Ausführung durch einen Prozessor eines Zugangsknotens den Zugangsknoten veranlassen, das Verfahren nach einem der Ansprüche 11 bis 12 durchzuführen.

## Revendications

1. Procédé d'un équipement utilisateur, le procédé comprenant les étapes suivantes :
recevoir d'une cellule un bloc d'informations système comprenant une pluralité de codes de zone de suivi associés à au moins un réseau, dans lequel un code de zone de suivi respectif de la pluralité de codes de zone de suivi est associé à une ou plusieurs tranches de réseau ou à un ou plusieurs groupes de tranches de réseau ; et
sélectionner un code de zone de suivi dans la pluralité de codes de zone de suivi associés à l'au moins un réseau, dans lequel la sélection est basée sur une priorité indiquée par un ordre de codage de la pluralité de codes de zone de suivi dans le bloc d'informations système.

2. Procédé selon la revendication 1, comprenant en outre les étapes suivantes :
identifier dans la pluralité de codes de zone de suivi un premier code de zone de suivi et un ou plusieurs deuxièmes codes de zone de suivi ; et
sélectionner le premier code de zone de suivi ou l'un des un ou plusieurs deuxièmes codes de zone de suivi.

3. Procédé selon l'une des revendications 1 à 2, comprenant en outre les étapes suivantes :
pour au moins un code de zone de suivi respectif de la pluralité de codes de zone de suivi, recevoir de la cellule un ou plusieurs identifiants pour une ou plusieurs tranches de réseau ou un ou plusieurs groupes de tranches de réseau ;
recevoir de la cellule une liste d'identifiants de zone de suivi comprenant un ou plusieurs parmi un identifiant de zone de suivi interdit ou un identifiant de zone de suivi autorisé ; et
déterminer si un ou plusieurs de la pluralité de codes de zone de suivi sont associés à la liste d'identifiants de zone de suivi.

4. Procédé selon l'une des revendications 1 à 3, comprenant en outre les étapes suivantes :
déterminer un ou plusieurs codes de zone de suivi autorisés de la pluralité de codes de zone de suivi ; et
sélectionner un code de zone de suivi autorisé respectif sur la base de priorités relatives des un ou plusieurs codes de zone de suivi autorisés.

5. Procédé selon l'une des revendications 1 à 4, comprenant en outre les étapes suivantes :
déterminer un ou plusieurs codes de zone de suivi interdits de la pluralité de codes de zone de suivi ; et
sélectionner un code de zone de suivi respectif sur la base de priorités relatives de la pluralité de codes de zone de suivi qui ne sont pas interdits.

6. Procédé selon l'une des revendications 1 à 5, dans lequel le premier code de zone de suivi de la pluralité de codes de zone de suivi est associé à un premier élément d'information du bloc d'informations système.

7. Procédé selon la revendication 6, dans lequel les un ou plusieurs deuxièmes codes de zone de suivi de la pluralité de codes de zone de suivi sont associés à un deuxième élément d'information du bloc d'informations système qui est différent du premier élément d'information.

8. Procédé selon les revendications 6 ou 7, dans lequel le premier code de zone de suivi est un code de zone de suivi primaire, et les un ou plusieurs deuxièmes codes de zone de suivi sont des codes de zone de suivi secondaires.

9. Procédé selon l'une des revendications 1 à 8, dans lequel un code de zone de suivi respectif de la pluralité de codes de zone de suivi est mappé à des informations respectives d'aide à la sélection de tranche de réseau unique.

10. Procédé selon l'une des revendications 1 à 9, dans lequel l'au moins un réseau comprend un ou plusieurs parmi un réseau mobile terrestre public, un réseau autonome non public ou un réseau non public intégré à un réseau public.

11. Procédé d'un nœud d'accès, le procédé comprenant l'étape suivante :
provoquer la transmission à au moins un équipement utilisateur d'un bloc d'informations système comprenant une pluralité de codes de zone de suivi associés à au moins un réseau, dans lequel un code de zone de suivi respectif de la pluralité de codes de zone de suivi est associé à une ou plusieurs tranches de réseau ou à un ou plusieurs groupes de tranches de réseau, et dans lequel un ordre de codage de la pluralité de codes de zone de suivi dans le bloc d'informations système indique une priorité de la pluralité de codes de zone de suivi.

12. Procédé selon la revendication 11, comprenant en outre l'étape suivante :
pour au moins un code de zone de suivi respectif de la pluralité de codes de zone de suivi, provoquer la transmission à l'au moins un équipement utilisateur d'un ou plusieurs identifiants pour les une ou plusieurs tranches de réseau ou les un ou plusieurs groupes de tranches de réseau.

13. Appareil comprenant des moyens pour mettre en œuvre le procédé d'un équipement utilisateur selon l'une des revendications 1 à 10, ou le procédé d'un nœud d'accès selon l'une des revendications 11 à 12.

14. Produit de programme informatique comprenant un support de stockage non transitoire lisible par ordinateur sur lequel sont stockées des parties de code de programme, les parties de code de programme étant configurées, lorsqu'elles sont exécutées par un processeur d'un équipement utilisateur, pour amener l'équipement utilisateur à effectuer le procédé selon l'une des revendications 1 à 10, ou lorsqu'elles sont exécutées par un processeur d'un nœud d'accès, pour amener le nœud d'accès à effectuer le procédé selon l'une des revendications 11 à 12.
